# EUROPEAN PATENT APPLICATION

(11) **EP 3 001 733 A1**
(43) Date of publication of application: **30.03.2016**
(21) Application number: 13889112.2
(22) Date of filing: 09.07.2013
(51) Int. Cl.: H04W 48/16

(54) **METHOD, DEVICE AND SYSTEM FOR NETWORK SELECTION**

(71) Applicant: Huawei Technologies Co., Ltd., Longgang District Shenzhen, Guangdong 518129 (CN)
(72) Inventor: JIN, Weisheng, Shenzhen city, Guangdong 518129 (CN)
(74) Representative: Pfenning, Meinig & Partner mbB
(86) International application number: PCT/CN2013/079061
(87) International publication number: WO 2015/003323

(57) **Abstract**

Embodiments of the present invention relate to the field of communications, and provide a network selection method, apparatus, and system. The method includes: after user equipment UE connects to a cellular access network, acquiring, by an access node of the cellular access network, wireless local area network WLAN selection information, where the WLAN selection information includes priority information, and the priority information is used to indicate that connection of the UE to a WLAN has priority over connection of the UE to the cellular access network; selecting, by the access node of the cellular access network, a WLAN network for the UE according to the priority information, where a connection priority of the selected WLAN network is higher than a connection priority of the cellular access network; and instructing, by the access node of the cellular access network, the UE to connect to the selected WLAN network. The apparatus includes: an acquiring module, a selection module, and a sending module. The system includes: UE and an access node of a cellular access network. The present invention improves efficiency of connecting to a network by UE, and makes behavior of the UE controllable.

## Description

### TECHNICAL FIELD

The present invention relates to the field of communications, and in particular, to a network selection method, apparatus, and system.

### BACKGROUND

In recent years, due to rapid spread of intelligent terminals and mobile applications, the mobile Internet develops rapidly, impact of a large data volume on mobile networks is caused, and a case of overload of 2G/3G mobile networks of operators across the globe occurs frequently. At present and in the future, an overwhelming majority of intelligent terminals support a WLAN (Wireless Local Area Network, wireless local area network); therefore, before LTE (Long Term Evolution, Long Term Evolution) is widely deployed, the WLAN that is originally and mainly used in enterprise and home scenarios is widely considered in the industry as a way in which a mobile network data volume can be offloaded for operators, and therefore receives considerable attention. How to refine a network that uses a WLAN technology into a network topology that can be operated by a cellular operator or can interwork with a cellular operator network is a problem that many operators hope to resolve first. Currently, there have been operators who integrate a WLAN AP (Access Point, access point) into a base station when deploying a small cell, such as a femto cell, a pico cell, or a micro cell, of a cellular network, which can resolve problems of deployment of the WLAN AP and sharing of transmission resources of the small cell of the cellular network.

After the WLAN AP is deployed, UE (User Equipment, user equipment) may scan and connect to the WLAN AP by using a WLAN module inside the UE. However, due to the nature of an unauthorized frequency spectrum system, there may be many cases in which after scanning the WLAN AP, the UE cannot connect or access a service. In addition, the UE continuously performs scanning, and attempts to connect to a surrounding WLAN AP, which not only consumes system resources, but also increases power consumption; and if the UE automatically connects to a malicious network, a hidden risk may be caused. For a dual-mode or multimode terminal of a WLAN and a 3GPP (3rd Generation Partnership Project, 3rd Generation Partnership Project) RAT (Radio Access Technology, radio access technology), a WLAN module thereof is generally disabled for reasons such as power saving, security, and performance. Therefore, how to implement effective discovery and selection of a WLAN AP by the UE is a problem that needs to be resolved urgently.

For the foregoing problem, an ANDSF (Access Network Discovery Support Functions, access network discovery and selection function) mechanism is introduced in the 3GPP, where access network discovery information, an inter-system mobility policy, an inter-system routing policy, and the like are delivered to the UE by using an ANDSF entity that is arranged in a core network and based on a user plane, and in a proper condition, the UE proactively decides to enable the WLAN module, to select and connect to a specific network.

However, in the foregoing technical solution, an ANDSF sends information and a policy to the UE by using a core network server; in such interaction, not only a time delay and a network burden are increased, but also efficiency is relatively low because the core network server cannot promptly and accurately obtain location topologies and statuses of various wireless local area networks. In addition, when to trigger, use, and perform the policy by the UE are implemented by the UE, and behavior of the UE is uncontrollable.

### SUMMARY

The present invention provides a network selection method, apparatus, and system, so as to improve efficiency of connecting to a network by UE, to make behavior of the UE controllable. The technical solutions are as follows:
According to a first aspect, the present invention provides a network selection method, including:
   after user equipment UE connects to a cellular access network, acquiring, by an access node of the cellular access network, wireless local area network WLAN selection information, where the WLAN selection information includes priority information, and the priority information is used to indicate that connection of the UE to a WLAN has priority over connection of the UE to the cellular access network;
   selecting, by the access node of the cellular access network, a WLAN network for the UE according to the priority information, where a connection priority of the selected WLAN network is higher than a connection priority of the cellular access network; and
   instructing, by the access node of the cellular access network, the UE to connect to the selected WLAN network, where
   that a connection priority of the selected WLAN network is higher than a connection priority of the cellular access network means that connection of the UE to the WLAN network has priority over connection of the UE to the cellular access network.

With reference to the foregoing method, in a first implementation manner, the priority information includes priority information of at least two WLAN networks; and
the selecting a WLAN network for the UE according to the priority information includes:
selecting, according to the priority information of the at least two WLAN networks, a WLAN network with the highest priority from the at least two WLAN networks; or selecting a WLAN network with a priority that is neither the highest nor the lowest.

With reference to the foregoing method or the first implementation manner, in a second implementation manner, the WLAN selection information further includes a load condition; and
the selecting a WLAN network for the UE according to the priority information includes:
selecting a WLAN network for the UE according to the priority information and the load condition, where the selected WLAN network meets the load condition.

With reference to the foregoing first implementation manner, in a third implementation manner, the WLAN selection information further includes load information of the at least two WLAN networks; and
the selecting a WLAN network for the UE according to the priority information includes:
selecting, according to the priority information of the at least two WLAN networks and the load information of the at least two WLAN networks, a WLAN network with the highest priority and the lowest load from the at least two WLAN networks; or selecting a WLAN network with a priority that is neither the highest nor the lowest and load that is neither the lowest nor the highest.

With reference to the foregoing method or the first implementation manner, in a fourth implementation manner, the WLAN selection information further includes a signal quality condition; and
the selecting a WLAN network for the UE according to the priority information includes:
selecting a WLAN network for the UE according to the priority information and the signal quality condition, where a signal received in the selected WLAN network by the UE meets the signal quality condition.

With reference to the foregoing fourth implementation manner, in a fifth implementation manner, the WLAN selection information further includes signal quality information of the at least two WLAN networks; and
the selecting a WLAN network for the UE according to the priority information includes:
selecting, according to the priority information of the at least two WLAN networks and the signal quality information of the at least two WLAN networks, a WLAN network with the highest priority and the best signal quality from the at least two WLAN networks; or selecting a WLAN network with a priority that is neither the highest nor the lowest and signal quality that is neither the best nor the worst, where for example, the signal quality may be determined according to signal strength, the highest signal strength indicates the best signal quality, and the lowest signal strength indicates the worst signal quality; certainly, the signal quality may also be indicated by another parameter, such as a bit error rate, a higher bit error rate indicates worse signal quality, and a lower bit error rate indicates better signal quality.

With reference to the foregoing method, in a sixth implementation manner, the WLAN selection information further includes a location condition; and
the selecting a WLAN network for the UE according to the priority information includes:
selecting a WLAN network for the UE according to the priority information and the location condition, where the UE is located inside an area indicated in the location condition or located outside an area indicated in the location condition.

With reference to the foregoing method or any one of the foregoing implementation manners, in a seventh implementation manner, the WLAN selection information further includes a realm name of a service provider; and
the instructing, by the access node of the cellular access network, the UE to connect to the selected WLAN network includes:
instructing, by the access node of the cellular access network, the UE to connect to the selected WLAN network provided by the service provider.

With reference to the foregoing method or any one of the foregoing implementation manners, in an eighth implementation manner, the acquiring, by an access node of the cellular access network, wireless local area network WLAN selection information includes:
receiving, by the access node of the cellular access network, the WLAN selection information sent by a mobility management entity MME or a serving general packet radio service support node SGSN; or
after establishing a connection to a policy and charging rules function PCRF or an access network discovery and selection function ANDSF, receiving, by the access node of the cellular access network, the WLAN selection information sent by the PCRF or the ANDSF.

With reference to the foregoing method or any one of the foregoing implementation manners, in a ninth implementation manner, the priority information includes:
a priority of a type of a connection technology for connecting to the cellular access network, and/or a priority of a type of a connection technology for connecting to the WLAN.

According to a second aspect, the present invention provides a network selection method, including:
receiving an indication sent by an access node of a cellular access network, where the indication includes information about a WLAN network that is selected by the access node of the cellular access network according to wireless local area network WLAN selection information; and
connecting to the WLAN network according to the indication, where
the WLAN selection information includes priority information, and the priority information is used to indicate that connection of the UE to a WLAN has priority over connection of the UE to the cellular access network.

With reference to the foregoing second aspect, in a first implementation manner, the indication further includes a realm name of a service provider; and
the connecting to the WLAN network according to the indication includes:
connecting, according to the information about the WLAN network and the realm name in the indication, to the WLAN provided by the service provider.

With reference to the foregoing second aspect or the first implementation manner, in a second implementation manner, the priority information includes: a priority of a type of a connection technology for connecting to the cellular access network, and/or a priority of a type of a connection technology for connecting to the WLAN.

According to a third aspect, the present invention provides a network selection method, including:
acquiring, by a mobility management entity MME/serving general packet radio service support node SGSN, wireless local area network WLAN selection information, where the WLAN selection information includes priority information, and the priority information is used to indicate that connection of user equipment UE to a WLAN has priority over connection of the UE to the cellular access network; and
sending, by the MME/SGSN, the WLAN selection information to an access node of the cellular access network, where the WLAN selection information is used by the access node of the cellular access network to select a WLAN network for the UE and instruct the UE to connect to the selected WLAN network.

With reference to the foregoing third aspect, in a first implementation manner, the acquiting, by an MME/SGSN, WLAN selection information includes:
receiving, by the MME/SGSN, subscription information of the UE sent by a home subscriber server HSS, and acquiring the WLAN selection information from the subscription information; or
receiving, by the MME/SGSN, the WLAN selection information sent by a policy and charging rules function PCRF/access network discovery and selection function ANDSF; or
after handover of the UE occurs or the UE is moved to a new location, receiving, by the MME/SGSN, the WLAN selection information sent by an old MME/SGSN.

With reference to the foregoing third aspect, in a second implementation manner, the sending, by the MME/SGSN, the WLAN selection information to an access node of the cellular access network includes:
when the UE is switched from an idle state to a connected state, sending, by the MME, the WLAN selection information to a cellular base station by using an initial context setup request message; or
sending, by the SGSN, the WLAN selection information to a cellular controller by using a radio access bearer assignment request message; or
sending, by the MME/SGSN, the WLAN selection information to the access node of the cellular access network by using a bearer modify request message; or
sending, by the MME/SGSN, the WLAN selection information to the access node of the cellular access network by using a downlink non-access stratum NAS transport message; or
sending, by the MME/SGSN, the WLAN selection information to the access node of the cellular access network by using a UE context modify request message.

With reference to the foregoing third aspect, in a third implementation manner, after the acquiring, by an MME/SGSN, WLAN selection information, the method further includes:
modifying, by the MME/SGSN, the WLAN selection information according to a local policy; and
correspondingly, the sending, by the MME/SGSN, the WLAN selection information to an access node of the cellular access network includes:
   sending, by the MME/SGSN, modified WLAN selection information to the access node of the cellular access network.

With reference to the foregoing third aspect or any one of the first to the third implementation manners, in a fourth implementation manner, the priority information includes: a priority of a type of a connection technology for connecting to the cellular access network, and/or a priority of a type of a connection technology for connecting to the WLAN.

According to a fourth aspect, the present invention provides a network selection method, including:
generating, by a policy and charging rules function PCRF/access network discovery and selection function ANDSF, wireless local area network WLAN selection information, where the WLAN selection information includes priority information, and the priority information is used to indicate that connection of user equipment UE to a WLAN has priority over connection of the UE to the cellular access network; and
sending, by the PCRF/ANDSF, the WLAN selection information to an access node of the cellular access network, where the WLAN selection information is used by the access node of the cellular access network to select a WLAN network for the UE and instruct the UE to connect to the selected WLAN network.

With reference to the foregoing fourth aspect, in a first implementation manner, the sending, by the PCRF/ANDSF, the WLAN selection information to an access node of the cellular access network includes:
establishing, by the PCRF/ANDSF, a connection to the access node of the cellular access network, and sending the WLAN selection information to the access node of the cellular access network by using the established connection; or
sending, by the PCRF/ANDSF, the WLAN selection information to a packet data network gateway PGW, sending, by the PGW, the WLAN selection information to a serving gateway SGW, sending, by the SGW, the WLAN selection information to a mobility management entity MME/serving general packet radio service support node SGSN, and sending, by the MME/SGSN, the WLAN selection information to the access node of the cellular access network; or
sending, by the PCRF/ANDSF, the WLAN selection information to a gateway general packet radio service support node GGSN, sending, by the GGSN, the WLAN selection information to a serving general packet radio service support node SGSN, and sending, by the SGSN, the WLAN selection information to the access node of the cellular access network.

With reference to the foregoing first implementation manner, in a second implementation manner, the establishing, by the PCRF/ANDSF, a connection to the access node of the cellular access network includes:
after an Internet Protocol-connectivity access network IP-CAN session of the UE is established, sending, by the PCRF/ANDSF, a connection establishment message to the access node of the cellular access network, and establishing a connection to the access node of the cellular access network; or
receiving, by the PCRF/ANDSF, a connection establishment message that is sent by the access node of the cellular access network after the UE is switched from an idle state to a connected state, and establishing a connection to the access node of the cellular access network.

With reference to the foregoing fourth aspect, in a third implementation manner, the generating, by a PCRF/ANDSF, WLAN selection information includes:
generating, by the PCRF/ANDSF, the WLAN selection information according to at least one of subscription information, a service usage status, location change information, or account information of the UE, or a network policy.

With reference to the foregoing fourth aspect or any one of the first to the third implementation manners, in a fourth implementation manner, the priority information includes: a priority of a type of a connection technology for connecting to the cellular access network, and/or a priority of a type of a connection technology for connecting to the WLAN.

According to a fifth aspect, the present invention provides a first apparatus for network selection, including:
an acquiring module, configured to: after user equipment UE connects to a cellular access network, acquire wireless local area network WLAN selection information, where the WLAN selection information includes priority information, and the priority information is used to indicate that connection of the UE to a WLAN has priority over connection of the UE to the cellular access network;
a selection module, configured to select a WLAN network for the UE according to the priority information, where a connection priority of the selected WLAN network is higher than a connection priority of the cellular access network; and
a sending module, configured to instruct the UE to connect to the selected WLAN network.

With reference to the foregoing fifth aspect, in a first implementation manner, the priority information includes priority information of at least two WLAN networks; and
the selection module is configured to:
select, according to the priority information of the at least two WLAN networks, a WLAN network with the highest priority from the at least two WLAN networks.

With reference to the foregoing fifth aspect or the first implementation manner, in a second implementation manner, the WLAN selection information further includes a load condition; and the selection module is configured to:
select a WLAN network for the UE according to the priority information and the load condition, where the selected WLAN network meets the load condition.

With reference to the foregoing first implementation manner, in a third implementation manner, the WLAN selection information further includes load information of the at least two WLAN networks; and
the selection module is configured to:
select, according to the priority information of the at least two WLAN networks and the load information of the at least two WLAN networks, a WLAN network with the highest priority and the lowest load from the at least two WLAN networks.

With reference to the foregoing fifth aspect or the first implementation manner, in a fourth implementation manner, the WLAN selection information further includes a signal quality condition; and the selection module is configured to:
select a WLAN network for the UE according to the priority information and the signal quality condition, where a signal received in the selected WLAN network by the UE meets the signal quality condition.

With reference to the foregoing fourth implementation manner, in a fifth implementation manner, the WLAN selection information further includes signal quality information of the at least two WLAN networks; and
the selection module is configured to:
select, according to the priority information of the at least two WLAN networks and the signal quality information of the at least two WLAN networks, a WLAN network with the highest priority and the best signal quality from the at least two WLAN networks.

With reference to the foregoing fifth aspect, in a sixth implementation manner, the WLAN selection information further includes a location condition; and the selection module is configured to:
select a WLAN network for the UE according to the priority information and the location condition, where the UE is located inside an area indicated in the location condition or located outside an area indicated in the location condition.

With reference to the foregoing fifth aspect or any one of the foregoing implementation manners, in a seventh implementation manner, the WLAN selection information further includes a realm name of a service provider; and
the sending module is configured to:
instruct the UE to connect to the WLAN provided by the service provider.

With reference to the foregoing fifth aspect or any one of the foregoing implementation manners, in an eighth implementation manner, the acquiring module includes:
a first acquiring unit, configured to receive the WLAN selection information sent by a mobility management entity MME/serving general packet radio service support node SGSN; or
a second acquiring unit, configured to: after establishing a connection to a policy and charging rules function PCRF/access network discovery and selection function ANDSF, receive the WLAN selection information sent by the PCRF/ANDSF.

With reference to the foregoing fifth aspect or any one of the foregoing implementation manners, in a ninth implementation manner, the priority information includes: a priority of a type of a connection technology for connecting to the cellular access network, and/or a priority of a type of a connection technology for connecting to the WLAN.

According to a sixth aspect, the present invention provides a second apparatus for network selection, including:
a receiving module, configured to receive an indication sent by an access node of a cellular access network, where the indication includes information about a WLAN network that is selected by the access node of the cellular access network according to wireless local area network WLAN selection information; and
a connection module, configured to connect to the WLAN network according to the indication received by the receiving module, where
the WLAN selection information includes priority information, and the priority information is used to indicate that connection of the UE to a WLAN has priority over connection of the UE to the cellular access network.

With reference to the foregoing sixth aspect, in a first implementation manner, the indication further includes a realm name of a service provider; and
the connection module is configured to:
connect, according to the information about the WLAN network and the realm name in the indication, to the WLAN provided by the service provider.

With reference to the foregoing sixth aspect or the first implementation manner, in a second implementation manner, the priority information includes: a priority of a type of a connection technology for connecting to the cellular access network, and/or a priority of a type of a connection technology for connecting to the WLAN.

According to a seventh aspect, the present invention provides a third apparatus for network selection, including:
an acquiring module, configured to acquire wireless local area network WLAN selection information, where the WLAN selection information includes priority information, and the priority information is used to indicate that connection of user equipment UE to a WLAN has priority over connection of the UE to the cellular access network; and
a sending module, configured to send the WLAN selection information to an access node of the cellular access network, where the WLAN selection information is used by the access node of the cellular access network to select a WLAN network for the UE and instruct the UE to connect to the selected WLAN network.

With reference to the foregoing seventh aspect, in a first implementation manner, the acquiring module includes:
a first acquiring unit, configured to receive subscription information of the UE sent by a home subscriber server HSS, and acquire the WLAN selection information from the subscription information; or
a second acquiring unit, configured to receive the WLAN selection information sent by a policy and charging rules function PCRF/access network discovery and selection function ANDSF; or
a third acquiring unit, configured to: after handover of the UE occurs or the UE is moved to a new location, receive the WLAN selection information sent by an old MME/SGSN.

With reference to the foregoing seventh aspect, in a second implementation manner, the sending module includes:
a first sending unit, configured to: when the UE is switched from an idle state to a connected state, send the WLAN selection information to a cellular base station by using an initial context setup request message; or
a second sending unit, configured to send the WLAN selection information to a cellular controller by using a radio access bearer assignment request message; or
a third sending unit, configured to send the WLAN selection information to the access node of the cellular access network by using a bearer modify request message; or
a fourth sending unit, configured to send the WLAN selection information to the access node of the cellular access network by using a downlink non-access stratum NAS transport message; or
a fifth sending unit, configured to send the WLAN selection information to the access node of the cellular access network by using a UE context modify request message.

With reference to the foregoing seventh aspect, in a third implementation manner, the third apparatus further includes:
a modification module, configured to: after the acquiring module acquires the WLAN selection information, modify the WLAN selection information according to a local policy; and
correspondingly, the sending module is configured to:
   send modified WLAN selection information to the access node of the cellular access network.

With reference to the foregoing seventh aspect or any one of the first to the third implementation manners, in a fourth implementation manner, the priority information includes: a priority of a type of a connection technology for connecting to the cellular access network, and/or a priority of a type of a connection technology for connecting to the WLAN.

According to an eighth aspect, the present invention provides a fourth apparatus for network selection, including:
a generation module, configured to generate wireless local area network WLAN selection information, where the WLAN selection information includes priority information, and the priority information is used to indicate that connection of user equipment UE to a WLAN has priority over connection of the UE to the cellular access network; and
a sending module, configured to send the WLAN selection information generated by the generation module to an access node of the cellular access network, where the WLAN selection information is used by the access node of the cellular access network to select a WLAN network for the UE and instruct the UE to connect to the selected WLAN network.

With reference to the foregoing eighth aspect, in a first implementation manner, the sending module includes:
a connection establishing unit, configured to establish a connection to the access node of the cellular access network; and
a first sending unit, sending the WLAN selection information to the access node of the cellular access network by using the established connection; or
the sending module includes:
   a second sending unit, configured to send the WLAN selection information to a mobility management entity MME/serving general packet radio service support node SGSN by using a packet data network gateway PGW and a serving gateway SGW, and send the WLAN selection information to the access node of the cellular access network by using the MME/SGSN; or send the WLAN selection information to a serving general packet radio service support node SGSN by using a gateway general packet radio service support node GGSN, and send the WLAN selection information to the access node of the cellular access network by using the SGSN.

With reference to the foregoing first implementation manner, in a second implementation manner, the connection establishing unit is configured to:
after an Internet Protocol-connectivity access network IP-CAN session of the UE is established, send a connection establishment message to the access node of the cellular access network, and establish a connection to the access node of the cellular access network; or
receive a connection establishment message that is sent by the access node of the cellular access network after the UE is switched from an idle state to a connected state, and establish a connection to the access node of the cellular access network.

With reference to the foregoing eighth aspect, in a third implementation manner, the generation module is configured to:
generate the WLAN selection information according to at least one of subscription information, a service usage status, location change information, or account information of the UE, or a network policy.

With reference to the foregoing eighth aspect or any one of the first to the third implementation manners, in a fourth implementation manner, the priority information includes: a priority of a type of a connection technology for connecting to the cellular access network, and/or a priority of a type of a connection technology for connecting to the WLAN.

According to a ninth aspect, the present invention provides a network selection system, including: an access node of a cellular access network, and user equipment UE, where
the access node of the cellular access network includes the first apparatus according to any one of the foregoing implementation manners of the fifth aspect; and
the UE includes the second apparatus according to any one of the foregoing implementation manners of the sixth aspect.

According to a tenth aspect, the present invention provides a network selection system, including: an access node of a cellular access network, user equipment UE, and a mobility management entity MME/serving general packet radio service support node SGSN, where
the access node of the cellular access network includes the first apparatus according to any one of the foregoing implementation manners of the fifth aspect;
the UE includes the second apparatus according to any one of the foregoing implementation manners of the sixth aspect; and
the MME/SGSN includes the third apparatus according to any one of the foregoing implementation manners of the seventh aspect.

According to an eleventh aspect, the present invention provides a network selection system, including: an access node of a cellular access network, user equipment UE, and a policy and charging rules function PCRF/access network discovery and selection function ANDSF, where
the access node of the cellular access network includes the first apparatus according to any one of the foregoing implementation manners of the fifth aspect;
the UE includes the second apparatus according to any one of the foregoing implementation manners of the sixth aspect; and
the PCRF/ANDSF includes the fourth apparatus according to any one of the foregoing implementation manners of the eighth aspect.

The technical solutions provided in the present invention have the following beneficial effects: after UE connects to a cellular access network, WLAN selection information is acquired, where the WLAN selection information includes priority information, and the priority information is used to indicate that connection of the UE to a WLAN has priority over connection of the UE to the cellular access network, a WLAN network is selected for the UE according to the WLAN selection information, and the UE is instructed to connect to the selected WLAN network, so that efficiency of connecting to a network by UE is improved, and behavior of the UE is controllable.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an LTE network architecture according to an embodiment of the present invention;
FIG. 2 is a schematic diagram of a 2G/3G network architecture according to an embodiment of the present invention;
FIG. 3 is a flowchart of a network selection method according to Embodiment 1 of the present invention;
FIG. 4 is a flowchart of a network selection method according to Embodiment 2 of the present invention;
FIG. 5 is a flowchart of a network selection method according to Embodiment 3 of the present invention;
FIG. 6 is a flowchart of a network selection method according to Embodiment 4 of the present invention;
FIG. 7 is a flowchart of a network selection method according to Embodiment 5 of the present invention;
FIG. 8 is a schematic diagram of setting of WLAN selection information according to Embodiment 5 of the present invention;
FIG. 9 is a schematic diagram showing that an MME sends WLAN selection information according to Embodiment 5 of the present invention;
FIG. 10 is another schematic diagram showing that an MME/SGSN sends WLAN selection information according to Embodiment 5 of the present invention;
FIG. 11 is still another schematic diagram showing that an MME/SGSN sends WLAN selection information according to Embodiment 5 of the present invention;
FIG. 12 is yet another schematic diagram showing that an MME/SGSN sends WLAN selection information according to Embodiment 5 of the present invention;
FIG. 13 is a schematic diagram of instructing UE by an eNB according to Embodiment 5 of the present invention;
FIG. 14 is a schematic flowchart of modifying an IP-CAN session triggered by a PCRF according to Embodiment 5 of the present invention;
FIG. 15 is a schematic flowchart of modifying an IP-CAN session triggered by a PGW/PCEF according to Embodiment 5 of the present invention;
FIG. 16 is a schematic flowchart of establishing an IP-CAN session according to Embodiment 5 of the present invention;
FIG. 17 is a flowchart of a network selection method according to Embodiment 6 of the present invention;
FIG. 18 is a schematic diagram of interaction between a PCRF/ANDSF and an eNB according to Embodiment 6 of the present invention;
FIG. 19 is another flowchart of a network selection method according to Embodiment 6 of the present invention;
FIG. 20 is a structural diagram of a first apparatus for network selection according to Embodiment 7 of the present invention;
FIG. 21 is a structural diagram of a second apparatus for network selection according to Embodiment 8 of the present invention;
FIG. 22 is a structural diagram of a third apparatus for network selection according to Embodiment 9 of the present invention;
FIG. 23 is a structural diagram of a fourth apparatus for network selection according to Embodiment 10 of the present invention;
FIG. 24 is a structural diagram of an access node of a cellular access network according to Embodiment 11 of the present invention;
FIG. 25 is a structural diagram of UE according to Embodiment 12 of the present invention;
FIG. 26 is a structural diagram of an MME/SGSN according to Embodiment 13 of the present invention;
FIG. 27 is a structural diagram of a PCRF/ANDSF according to Embodiment 14 of the present invention;
FIG. 28 is a structural diagram of a network selection system according to Embodiment 15 of the present invention;
FIG. 29 is a structural diagram of a network selection system according to Embodiment 16 of the present invention; and
FIG. 30 is a structural diagram of a network selection system according to Embodiment 17 of the present invention.

### DESCRIPTION OF EMBODIMENTS

To make the objectives, technical solutions, and advantages of the present invention clearer, the following further describes the embodiments of the present invention in detail with reference to the accompanying drawings.

The embodiments of the present invention relate to a network selection method, apparatus, and system; and a network side selects a proper network for UE from a cellular network and a WLAN, and instructs the UE to connect to the network by using an access node of a cellular access network. The cellular access network includes a network of a connection technology type, such as LTE, UMTS, CDMA 2000 or GSM, or CDMA2000 1x, where LTE belongs to the fourth generation mobile communications technology (4G), UMTS and CDMA 2000 belong to the third generation mobile communications technology (3G), and GSM and CDMA 2000 1x belong to the second generation mobile communications technology (2G). The access node of the cellular access network includes: an SRC (Single Radio Controller, single radio controller), an eNodeB (evolved Node Base, evolved node base) in LTE, an RNC (Radio Network Controller, radio network controller) or a NodeB (Node Base, base station) in 3G, or a BSC (Base Station Controller, base station controller) or a BTS (Base Transceiver Station, base station transceiver station) in 2G, or the like.

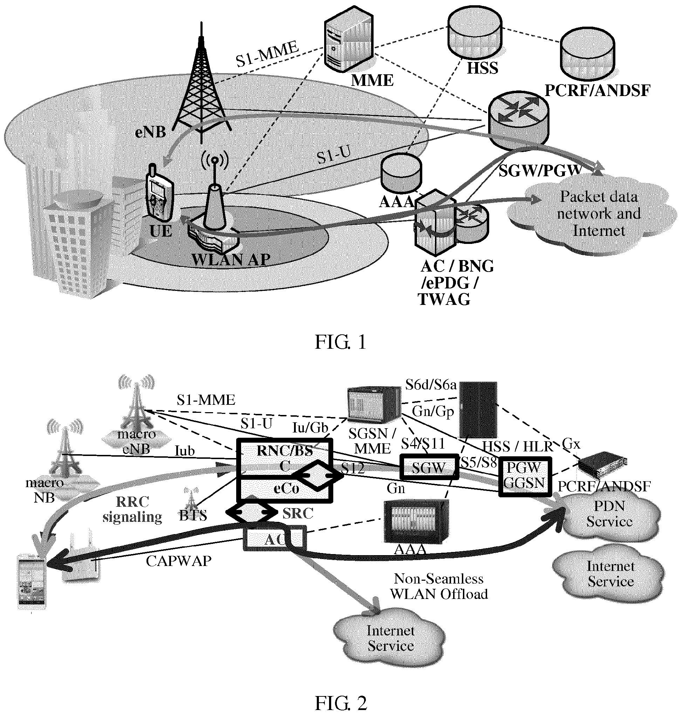

Refer to FIG. 1, which is a schematic diagram of an LTE network architecture according to an embodiment of the present invention. An HSS (Home Subscriber Server, home subscriber server) stores subscription information of UE, and a PCRF (Policy and Charging Rules Function, policy and charging rules function)/ANDSF may generate WLAN selection information, where the WLAN selection information includes a radio access technology type and WLAN priority information, and transmit the WLAN selection information to an eNB by using a device such as an SGW (Serving Gateway, serving gateway)/PGW (PDN Gateway, packet data network gateway), or an MME (Mobility Management Entity, mobility management entity), and the eNB selects a proper network for the UE according to the WLAN selection information and instructs the UE to connect to the network, so that efficiency of connecting to a network by UE is improved, and behavior of the UE is controllable.

Refer to FIG. 2, which is a schematic diagram of a 2G/3G network architecture according to an embodiment of the present invention. An HSS/HLR (Home Location Register, home location register) stores subscription information of UE, a PCRF/ANDSF may generate WLAN selection information, where the WLAN selection information includes a radio access technology type and WLAN priority information, and transmit the WLAN selection information to a NodeB or a BTS by using a device, such as an SGW/PGW, or an MME/SGSN (Serving GPRS Support Node, serving GPRS support node), and the NodeB or the BTS selects a proper network for the UE according to the WLAN selection information and instructs the UE to connect to the network, so that efficiency of connecting to a network by UE is improved, and behavior of the UE is controllable.

It should be declared that, in descriptions of a cellular base station/controller, an MME/SGSN, a PCRF/ANDSF, a PGW/PCEF, and the like involved in the present invention, "/" indicates "or", and two devices separated by using "/" are in an OR relationship. In an actual network application, a device before or after "/" may be deployed as required, and a same process is performed, which is not specifically limited in the embodiments of the present invention, and is not declared one by one below.

### Embodiment 1

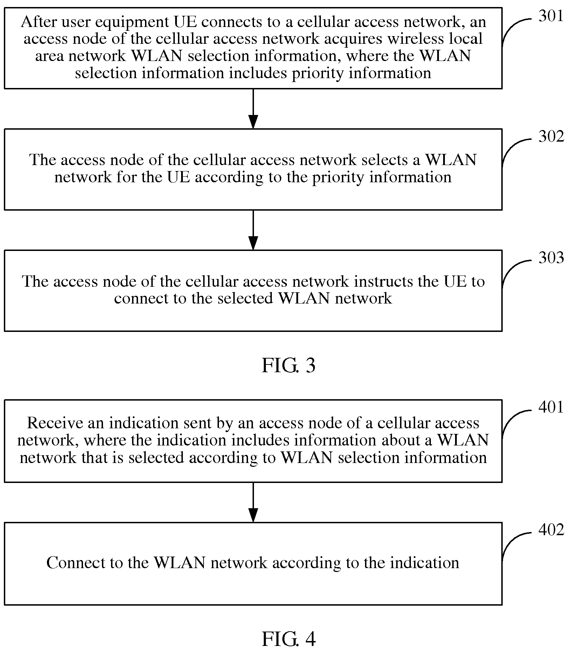

Referring to FIG. 3, this embodiment provides a network selection method, including:
301. After user equipment UE connects to a cellular access network, an access node of the cellular access network acquires wireless local area network WLAN selection information, where the WLAN selection information includes priority information, and the priority information is used to indicate that connection of the UE to a WLAN has priority over connection of the UE to the cellular access network.
302. The access node of the cellular access network selects a WLAN network for the UE according to the priority information, where a connection priority of the selected WLAN network is higher than a connection priority of the cellular access network.

In this embodiment, that a connection priority of the selected WLAN network is higher than a connection priority of the cellular access network means that connection of the UE to the WLAN network has priority over connection of the UE to the cellular access network.

303. The access node of the cellular access network instructs the UE to connect to the selected WLAN network.

In this embodiment, the WLAN selection information may be acquired by an MME/SGSN from subscription information of the UE sent by an HSS/HLR, or may be generated and sent to an MME/SGSN by a PCRF/ANDSF according to at least one of subscription information, a service usage status, location change information, or account information of the UE, or a network policy. After acquiring the WLAN selection information, the MME/SGSN may directly forward the WLAN selection information to the access node of the cellular access network, or may modify the WLAN selection information according to a local policy and then send modified WLAN selection information to the access node of the cellular access network, where, if the UE is in a roaming network, the local policy on which the MME/SGSN depends may be a policy selected by a WLAN and a cellular network of an operator of a visited place. The performing modification according to a local policy may be adjusting a radio access technology type and a WLAN priority order, or may be adjusting a priority order of different WLAN networks, or adding or barring some WLAN networks.

The WLAN selection information includes identifier information, such as an SSID (Service Set Identification, service set identifier), an SSID+HESSID (Homogenous Extended Service Set Identifier, homogenous extended service set identifier), an OUI (Organization Universal Identity, organization universal identity), a BSSID (Basic Service Set Identification, basic service set identifier), or the like, of the selected network. The radio access technology type and WLAN priority information may be set according to different granularities as required, may be set according to a cellular network and a granularity of a WLAN, may be set according to different standards of cellular networks and a granularity of a WLAN, or may be set according to WLANs with different identifiers and a granularity of a cellular network/cellular standard, which is not specifically limited in this embodiment.

With reference to the foregoing method, in a first implementation manner, the priority information includes priority information of at least two WLAN networks; and
the selecting a WLAN network for the UE according to the priority information includes:
selecting, according to the priority information of the at least two WLAN networks, a WLAN network with the highest priority from the at least two WLAN networks.

With reference to the foregoing method or the first implementation manner, in a second implementation manner, the WLAN selection information further includes a load condition; and
the selecting a WLAN network for the UE according to the priority information includes:
selecting a WLAN network for the UE according to the priority information and the load condition, where the selected WLAN network meets the load condition.

With reference to the foregoing first implementation manner, in a third implementation manner, the WLAN selection information further includes load information of the at least two WLAN networks; and
the selecting a WLAN network for the UE according to the priority information includes:
selecting, according to the priority information of the at least two WLAN networks and the load information of the at least two WLAN networks, a WLAN network with the highest priority and the lowest load from the at least two WLAN networks.

With reference to the foregoing method or the first implementation manner, in a fourth implementation manner, the WLAN selection information further includes a signal quality condition; and
the selecting a WLAN network for the UE according to the priority information includes:
selecting a WLAN network for the UE according to the priority information and the signal quality condition, where a signal received in the selected WLAN network by the UE meets the signal quality condition.

With reference to the foregoing fourth implementation manner, in a fifth implementation manner, the WLAN selection information further includes signal quality information of the at least two WLAN networks; and
the selecting a WLAN network for the UE according to the priority information includes:
selecting, according to the priority information of the at least two WLAN networks and the signal quality information of the at least two WLAN networks, a WLAN network with the highest priority and the best signal quality from the at least two WLAN networks.

With reference to the foregoing method, in a sixth implementation manner, the WLAN selection information further includes a location condition; and
the selecting a WLAN network for the UE according to the priority information includes:
selecting a WLAN network for the UE according to the priority information and the location condition, where the UE is located inside an area indicated in the location condition or located outside an area indicated in the location condition.

Moreover, a network with the highest priority may be selected for the UE according to the priority information in a specified time period or at any moment except a specified time period.

In this embodiment, the foregoing load condition, signal quality condition, location condition, and specified time period may further be arbitrarily combined for an application, that is, the WLAN selection information may include any one or more of a load condition, a signal quality condition, a location condition, and a specified time period.

Specifically, that load of a WLAN meets the load condition may specifically include: the load of the WLAN is less than or greater than a set first threshold.

Specifically, that quality of a signal received in the WLAN by the UE meets the signal quality condition may specifically include: quality of a signal received in the WLAN by the UE is less than or is greater than a set second threshold.

Specifically, an area specified in the location condition includes but is not limited to: a specified location area (LA), a routing area (RA), a tracking area (TA), a controller (RNC ID, SRC ID), a base station (eNB, NodeB, BTS), or a cell (Cell).

With reference to the foregoing method or any one of the foregoing implementation manners, in a seventh implementation manner, the WLAN selection information further includes a realm name of a service provider; and
the instructing, by the access node of the cellular access network, the UE to connect to the selected WLAN network includes:
instructing, by the access node of the cellular access network, the UE to connect to the selected WLAN network provided by the service provider.

The realm name (realm name) of the service provider may be in a form of a list, and include one or more realm names. Specifically, the realm name may include a PLMN (Public Land Mobile Network, public land mobile network) ID. Further, priorities of service providers may be set, and the access node of the cellular access network selects, for the UE, according to WLAN information (a capability that a WLAN network supports connecting to a service provider, and the like) known by the access node of the cellular access network, a service provider used by a WLAN to which the UE connects, and sends the service provider to the UE, where there may be one or more service providers. Alternatively, a core network may specify, when WLAN selection information sent to the access node of the cellular access network includes an identifier of a WLAN network, a realm name of a service provider used by the UE when connecting to the WLAN network.

With reference to the foregoing method or any one of the foregoing implementation manners, in an eighth implementation manner, the acquiring, by an access node of the cellular access network, wireless local area network WLAN selection information includes:
receiving, by the access node of the cellular access network, the WLAN selection information sent by a mobility management entity MME or a serving general packet radio service support node SGSN; or
after establishing a connection to a policy and charging rules function PCRF or an access network discovery and selection function ANDSF, receiving, by the access node of the cellular access network, the WLAN selection information sent by the PCRF or the ANDSF.

In this embodiment, the access node of the cellular access network may instruct, by using a message, such as an RB (Radio Bearer, radio bearer) Establishment establishment message or an RRC (Radio Resource Control, Radio Resource Control) Connection Reconfiguration connection reconfiguration message, in air interface interaction between the access node and the UE, the UE to connect to a network. Specifically, a selected network identifier and/or a realm name of a service provider may be added to the foregoing message.

With reference to the foregoing first method or any one of the foregoing implementation manners, in a ninth implementation manner, the priority information includes: a priority of a type of a connection technology for connecting to the cellular access network, and/or a priority of a type of a connection technology for connecting to the WLAN.

For example, it may only be provided that a priority of a type of a connection technology for connecting to a WLAN is the highest, which indicates that the type of the connection technology for connecting to the WLAN is better than any type of connection technology of any other network. Alternatively, both a priority of a type of a connection technology for connecting to a cellular access network and a priority of a type of a connection technology for connecting to a WLAN may be provided, and the latter priority is higher than the former priority, and the like.

According to the foregoing method provided in this embodiment, after UE connects to a cellular access network, WLAN selection information is acquired, where the WLAN selection information includes priority information, and the priority information is used to indicate that connection of the UE to a WLAN has priority over connection of the UE to the cellular access network, a WLAN network is selected for the UE according to the WLAN selection information, and the UE is instructed to connect to the selected WLAN network, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 2

Referring to FIG. 4, this embodiment provides a network selection method, including:
401. Receive an indication sent by an access node of a cellular access network, where the indication includes information about a WLAN network that is selected by the access node of the cellular access network according to wireless local area network WLAN selection information.
402. Connect to the WLAN network according to the indication.

The WLAN selection information includes priority information, and the priority information is used to indicate that connection of the UE to a WLAN has priority over connection of the UE to the cellular access network.

With reference to the foregoing method, in a first implementation manner, the indication further includes a realm name of a service provider; and
the connecting to the WLAN network according to the indication includes:
connecting, according to the information about the WLAN network and the realm name in the indication, to the WLAN provided by the service provider.

The realm name of the service provider may be in a form of a list, and include one or more realm names. Specifically, the realm name may include a PLMN (Public Land Mobile Network, public land mobile network) ID. Further, a network side may further set priorities of service providers, and the access node of the cellular access network selects, for the UE, according to WLAN information (a capability that a WLAN network supports connecting to a service provider, and the like) known by the access node of the cellular access network, a service provider used by a WLAN to which the UE connects, and sends the service provider to the UE, where there may be one or more service providers. Alternatively, a core network may specify, when WLAN selection information sent to the access node of the cellular access network includes an identifier of a WLAN network, a realm name of a service provider used by the UE when connecting to the WLAN network. After receiving the realm name, the UE may accurately connect, according to the realm name, to the WLAN provided by a corresponding service provider.

In this embodiment, when connecting to a WLAN network selected by the network side for the UE, the UE may generate an NAI (Network Access Identifier, network access identifier) by using the realm name, and perform authentication in the WLAN network by using the NAI. If the access node of the cellular access network sends multiple realm names of service providers, the UE selects, according to a realm name of a service provider and a priority that are stored in the UE, a realm name of a service provider with the highest priority from the multiple service providers, to generate an NAI, and performs authentication in the WLAN network by using the NAI.

With reference to the foregoing first method or the first implementation manner, in a second implementation manner, the priority information includes: a priority of a type of a connection technology for connecting to the cellular access network, and/or a priority of a type of a connection technology for connecting to the WLAN.

The foregoing method provided in this embodiment may be performed by UE.

According to the foregoing method provided in this embodiment, an indication sent by an access node of a cellular access network is received, where the indication includes information about a WLAN network that is selected by the access node of the cellular access network according to wireless local area network WLAN selection information, and connection to the WLAN network is performed according to the indication, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 3

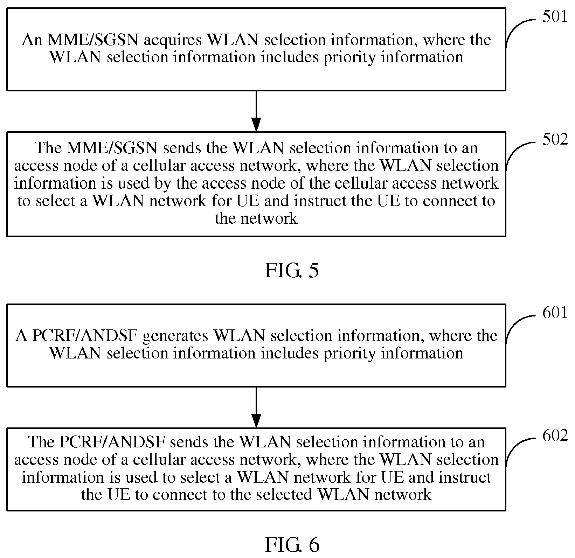

Referring to FIG. 5, this embodiment provides a network selection method, including:
501. A mobility management network element acquires wireless local area network WLAN selection information, where the WLAN selection information includes priority information, and the priority information is used to indicate that connection of user equipment UE to a WLAN has priority over connection of the UE to the cellular access network.
502. The mobility management network element sends the WLAN selection information to an access node of the cellular access network, where the WLAN selection information is used by the access node of the cellular access network to select a WLAN network for the UE and instruct the UE to connect to the selected WLAN network.

In this embodiment, the mobility management network element refers to a mobility management entity MME/serving general packet radio service support node SGSN.

With reference to the foregoing method, in a first implementation manner, the acquiring, by a mobility management network element, WLAN selection information includes:
receiving, by the MME/SGSN, subscription information of the UE sent by a home subscriber server HSS, and acquiring the WLAN selection information from the subscription information; or
receiving, by the MME/SGSN, the WLAN selection information sent by a policy and charging rules function PCRF/access network discovery and selection function ANDSF; or
after handover of the UE occurs or the UE is moved to a new location, receiving, by the MME/SGSN, the WLAN selection information sent by an old (old) MME/SGSN, where the old MME/SGSN refers to an MME/SGSN that performs mobility management on the UE before the handover of the UE.

In this embodiment, the WLAN selection information may be acquired by the MME/SGSN from the subscription information of the UE sent by the HSS/HLR; or may be generated and sent to the MME/SGSN by the PCRF/ANDSF according to at least one of the subscription information, a service usage status, location change information, or account information of the UE, or a network policy; or may be acquired from the old MME/SGSN after the handover of the UE occurs or the UE is moved to the new location. After acquiring the WLAN selection information, the MME/SGSN may directly forward the WLAN selection information to the access node of the cellular access network, or may modify the WLAN selection information according to a local policy and then send modified WLAN selection information to the access node of the cellular access network, where, if the UE is in a roaming network, the local policy on which the MME/SGSN depends may be a policy selected by a WLAN and a cellular network of an operator of a visited place. The performing modification according to a local policy may be adjusting a radio access technology type and a WLAN priority order, or may be adjusting a priority order of different WLAN networks, or adding or barring some WLAN networks.

With reference to the foregoing method, in a second implementation manner, the sending, by the mobility management network element, the WLAN selection information to an access node of the cellular access network includes:
when the UE is switched from an idle state to a connected state, sending, by the MME, the WLAN selection information to a cellular base station by using an initial context setup request Initial Context Setup Request message; or
sending, by the SGSN, the WLAN selection information to a cellular controller RNC/SRC by using a radio access bearer assignment request RAB Assignment Request message; or
sending, by the MME/SGSN, the WLAN selection information to the access node of the cellular access network by using a bearer modify request message; or
sending, by the MME/SGSN, the WLAN selection information to the access node of the cellular access network by using a downlink non-access stratum NAS transport message; or
sending, by the MME/SGSN, the WLAN selection information to the access node of the cellular access network by using a UE context modify request message.

With reference to the foregoing method, in a third implementation manner, after the acquiring, by a mobility management network element, WLAN selection information, the method further includes:
modifying, by the MME/SGSN, the WLAN selection information according to a local policy; and
correspondingly, the sending, by the MME/SGSN, the WLAN selection information to an access node of the cellular access network includes:
   sending, by the MME/SGSN, modified WLAN selection information to the access node of the cellular access network.

With reference to the foregoing method or any one of the first to the third implementation manners, in a fourth implementation manner, the priority information includes: a priority of a type of a connection technology for connecting to the cellular access network, and/or a priority of a type of a connection technology for connecting to the WLAN.

According to the foregoing method provided in this embodiment, a mobility management network element acquires WLAN selection information, where the WLAN selection information includes priority information, and the priority information is used to indicate that connection of user equipment UE to a WLAN has priority over connection of the UE to the cellular access network, and sends the WLAN selection information to an access node of the cellular access network, so that the access node of the cellular access network selects a WLAN network for the UE and instructs the UE to connect to the selected WLAN network, efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 4

Referring to FIG. 6, this embodiment provides a network selection method, including:
601. A policy and charging rules function PCRF/access network discovery and selection function ANDSF generates wireless local area network WLAN selection information, where the WLAN selection information includes priority information, and the priority information is used to indicate that connection of user equipment UE to a WLAN has priority over connection of the UE to the cellular access network.
602. The PCRF/ANDSF sends the WLAN selection information to an access node of the cellular access network, where the WLAN selection information is used by the access node of the cellular access network to select a WLAN network for the UE and instruct the UE to connect to the selected WLAN network.

With reference to the foregoing method, in a first implementation manner, the sending, by the PCRF/ANDSF, the WLAN selection information to an access node of the cellular access network includes:
establishing, by the PCRF/ANDSF, a connection to the access node of the cellular access network, and sending the WLAN selection information to the access node of the cellular access network by using the established connection; or
sending, by the PCRF/ANDSF, the WLAN selection information to a packet data network gateway PGW, sending, by the PGW, the WLAN selection information to a serving gateway SGW, sending, by the SGW, the WLAN selection information to a mobility management entity MME/serving general packet radio service support node SGSN, and sending, by the MME/SGSN, the WLAN selection information to the access node of the cellular access network; or
sending, by the PCRF/ANDSF, the WLAN selection information to a gateway general packet radio service support node GGSN, sending, by the GGSN, the WLAN selection information to a serving general packet radio service support node SGSN, and sending, by the SGSN, the WLAN selection information to the access node of the cellular access network.

With reference to the foregoing first implementation manner, in a second implementation manner, the establishing, by the PCRF/ANDSF, a connection to the access node of the cellular access network includes:
after an Internet Protocol-connectivity access network IP-CAN session of the UE is established, sending, by the PCRF/ANDSF, a connection establishment message to the access node of the cellular access network, and establishing a connection to the access node of the cellular access network; or
receiving, by the PCRF/ANDSF, a connection establishment message that is sent by the access node of the cellular access network after the UE is switched from an idle state to a connected state, and establishing a connection to the access node of the cellular access network.

With reference to the foregoing method, in a third implementation manner, the generating, by a PCRF/ANDSF, WLAN selection information includes:
generating, by the PCRF/ANDSF, the WLAN selection information according to at least one of subscription information, a service usage status, location change information, or account information of the UE, or a network policy.

The subscription information of the UE includes but is not limited to information about, such as a traffic package or a duration package, of the UE. The location change information of the UE includes but is not limited to: whether the UE is located in a specified location area, a routing area, a tracking area, or a cell. The account information includes but is not limited to: balance information of an account of a user. The network policy includes but is not limited to: a network load balancing policy. For example, in an initial case, in WLAN selection information of the UE, a priority of a cellular network is higher than a priority of a WLAN, when a cellular network traffic package or duration package of the UE in the package period has been used up or is to be used up, a cellular network usage fee of the UE is to be increased or a cellular network speed is to be decreased, and the PCRF obtains a package usage state of the UE from a billing system, and triggers the WLAN selection information to be adjusted to WLAN selection information in which the priority of the WLAN is higher than the priority of the cellular network.

With reference to the foregoing method or any one of the first to the third implementation manners, in a fourth implementation manner, the priority information includes: a priority of a type of a connection technology for connecting to the cellular access network, and/or a priority of a type of a connection technology for connecting to the WLAN.

According to the foregoing method provided in this embodiment, a PCRF/ANDSF generates WLAN selection information, where the WLAN selection information includes priority information, and the priority information is used to indicate that connection of the UE to a WLAN has priority over connection of the UE to the cellular access network, and sends the WLAN selection information to an access node of the cellular access network, so that the access node of the cellular access network selects a WLAN network for the UE and instructs the UE to connect to the selected WLAN network, efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 5

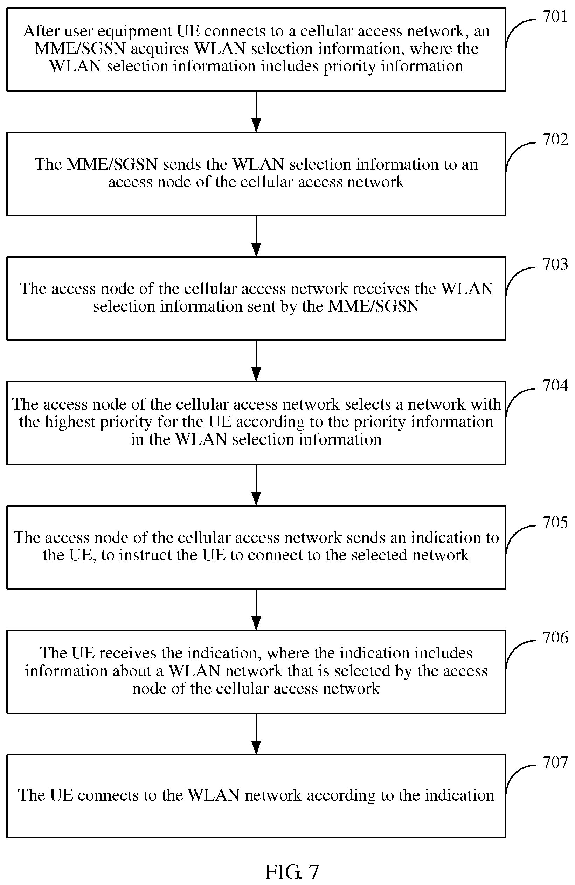

Referring to FIG. 7, this embodiment provides a network selection method, including:
701. After user equipment UE connects to a cellular access network, an MME/SGSN acquires WLAN selection information, where the WLAN selection information includes priority information, and the priority information is used to indicate that connection of the UE to a WLAN has priority over connection of the UE to the cellular access network.

The acquiring, by an MME/SGSN, WLAN selection information includes:
receiving, by the MME/SGSN, subscription information of the UE sent by a home subscriber server HSS, and acquiring the WLAN selection information from the subscription information; or
receiving, by the MME/SGSN, the WLAN selection information sent by a policy and charging rules function PCRF/access network discovery and selection function ANDSF; or
after handover of the UE occurs or the UE is moved to a new location, receiving, by the MME/SGSN, the WLAN selection information sent by an old MME/SGSN.

In this embodiment, the WLAN selection information includes identifier information, such as an SSID, an SSID+HESSID, an OUI, a BSSID, or the like, of a selected network. The radio access technology type and WLAN priority information may be set according to different granularities as required, may be set according to a cellular network and a granularity of a WLAN, may be set according to different standards of cellular networks and a granularity of a WLAN, or may be set according to WLANs with different identifiers and a granularity of a cellular network/cellular standard, which is not specifically limited in this embodiment.

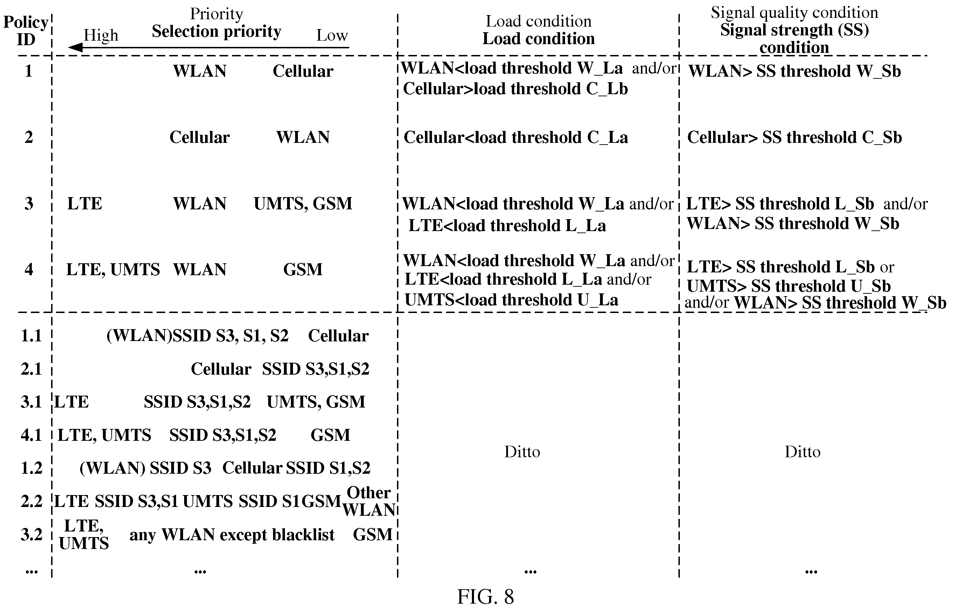

For example, refer to FIG. 8, which is a setting manner of WLAN selection information. Settings of priorities may be: a WLAN>a cellular cell Celluar, or LTE>a WLAN>a UMTS or a GSM, or LTE>an UMTS>a WLAN>a GSM, or LTE>SSIDs (Service Set Identification, service set identifier) S1, S2, and S3>a UMTS>a GSM, or the like. There may exist multiple networks at a level of a same priority, which indicates that the multiple networks have a same priority. For example, for three different WLANs, that is, WLANs S1, S2, and S3, there may be a case in which a priority of S1>a priority of S2>a priority of S3, or the three different WLANs may have a same priority. In this figure, either a load threshold load threshold or an SS (Signal Strength, signal strength) threshold threshold may be set as required, which is not much described herein. The SSID may further be replaced by any one of the following identifiers: an SSID+HESSID (Homogenous Extended Service Set Identifier, homogenous extended service set identifier), an OUI (Organization Universal Identity, organization universal identity), a BSSID (Basic Service Set Identification, basic service set identifier), or the like.

702. The MME/SGSN sends the WLAN selection information to an access node of the cellular access network.

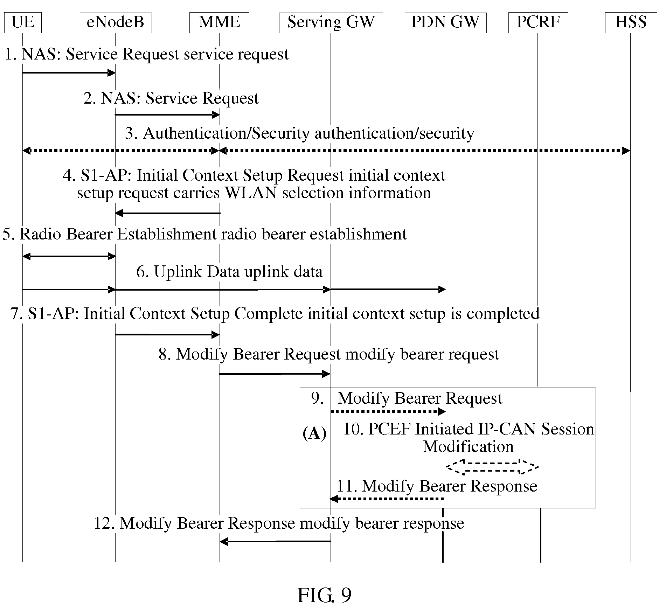

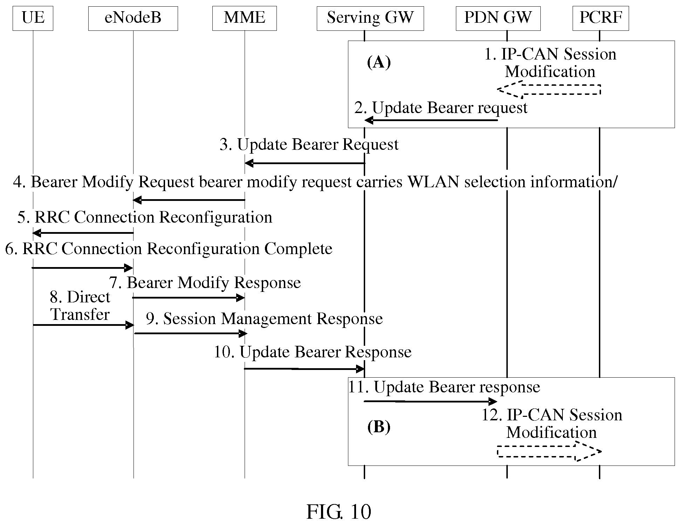

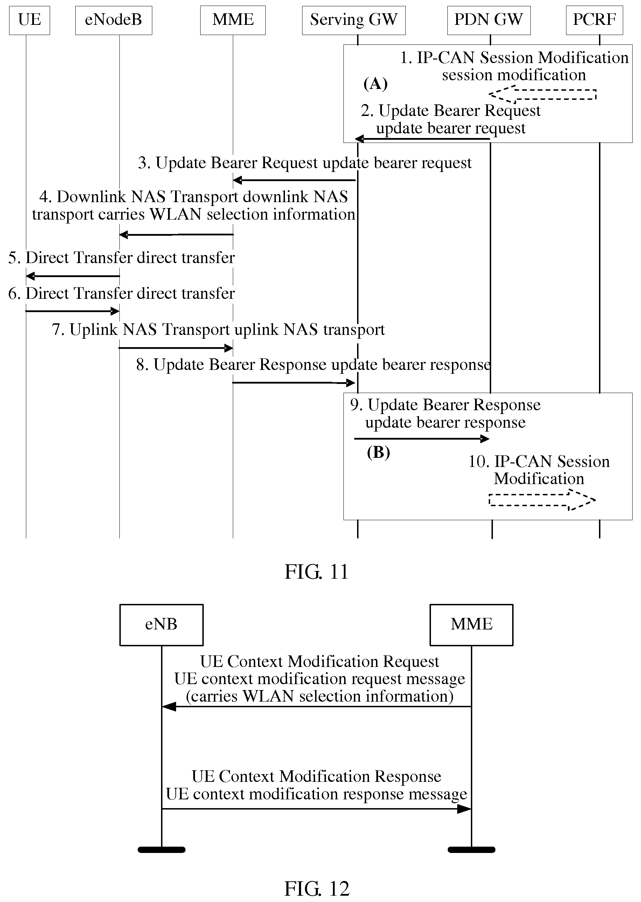

This step may specifically include any one of the following five steps:
First: When the UE is switched from an idle state to a connected state, the MME sends the WLAN selection information to a cellular base station by using an initial context setup request message. For example, refer to FIG. 9, which is a schematic diagram showing that when the UE is switched from the idle state to the connected state, the MME sends the WLAN selection information to an eNB by using an Initial Context Setup Request message (initial context setup request). If an SRC is also deployed in the network, the operation of selecting a network according to the WLAN selection information may be performed by the eNB or the SRC, and after the network is selected, the eNB instructs the UE.
Second: The SGSN sends the WLAN selection information to a cellular controller by using a radio access bearer assignment request message.
Third: The MME/SGSN sends the WLAN selection information to the access node of the cellular access network by using a bearer modify request message. For example, refer to FIG. 10, which is a schematic diagram showing that the MME/SGSN sends the WLAN selection information to the eNB by using a Bearer Modify Request (a bearer modify request) message.
Fourth: The MME/SGSN sends the WLAN selection information to the access node of the cellular access network by using a downlink non-access stratum NAS transport message. For example, refer to FIG. 11, which is a schematic diagram showing that the MME/SGSN sends the WLAN selection information to the eNB by using a downlink Downlink NAS (Non-Access-Stratum, non-access stratum) transport message.
Fifth: The MME/SGSN sends the WLAN selection information to the access node of the cellular access network by using a UE context modify request message. For example, refer to FIG. 12, which is a schematic diagram showing that the MME/SGSN sends the WLAN selection information to the eNB by using a UE Context Modification Request (context modification request) message.

In this embodiment, after the acquiring, by an MME/SGSN, WLAN selection information, the method may further include: modifying, by the MME/SGSN, the WLAN selection information according to a local policy; and correspondingly, the sending, by the MME/SGSN, the WLAN selection information to an access node of the cellular access network includes: sending, by the MME/SGSN, modified WLAN selection information to the access node of the cellular access network.

703. The access node of the cellular access network receives the WLAN selection information sent by the MME/SGSN.

704. The access node of the cellular access network selects a network with the highest priority for the UE according to the priority information in the WLAN selection information.

In a scenario, the WLAN selection information further includes a load condition, and step 704 may include:
selecting a WLAN network for the UE according to the priority information and the load condition, where the selected WLAN network meets the load condition.

Further, the WLAN selection information further includes load information of the at least two WLAN networks, and step 704 may include:
selecting, according to priority information of the at least two WLAN networks and the load information of the at least two WLAN networks, a WLAN network with the highest priority and the lowest load from the at least two WLAN networks.

In another scenario, the WLAN selection information further includes a signal quality condition, and step 704 may include:
The selecting a WLAN network for the UE according to the priority information includes:
   selecting a WLAN network for the UE according to the priority information and the signal quality condition, where a signal received in the selected WLAN network by the UE meets the signal quality condition.

The signal quality may be represented by using various parameters, such as signal strength, a bit error rate, and the like, which is not specifically limited in this embodiment. Generally, stronger signal strength indicates better signal quality, while weaker signal strength indicates worse signal quality; and a higher bit error rate indicates worse signal quality, while a lower bit error rate indicates better signal quality.

Further, the WLAN selection information further includes signal quality information of the at least two WLAN networks, and step 704 may include:
selecting, according to the priority information of the at least two WLAN networks and the signal quality information of the at least two WLAN networks, a WLAN network with the highest priority and the best signal quality from the at least two WLAN networks.

In still another scenario, the WLAN selection information further includes a location condition, and step 704 includes:
selecting a WLAN network for the UE according to the priority information and the location condition, where the UE is located inside an area indicated in the location condition or located outside an area indicated in the location condition.

Moreover, a WLAN network with the highest priority may be selected for the UE according to the priority information in a specified time period or at any moment except a specified time period.

In this embodiment, the foregoing load condition, signal quality condition, location condition, and specified time period may further be arbitrarily combined for an application, that is, the WLAN selection information may include any one or more of a load condition, a signal quality condition, a location condition, and a specified time period.

Specifically, that load of a WLAN meets the load condition may specifically include: the load of the WLAN is less than or greater than a set first threshold.

Specifically, that quality of a signal, in the WLAN, of the UE meets the signal quality condition may specifically include: quality of a signal, in the WLAN, of the UE is less than or is greater than a set second threshold.

Specifically, an area indicated in the location condition includes but is not limited to: a specified location area (LA), a routing area (RA), a tracking area (TA), a controller (RNC ID, SRC ID), a base station (eNB, NodeB, BTS), or a cell (Cell).

705. The access node of the cellular access network sends an indication to the UE, to instruct the UE to connect to the selected network.

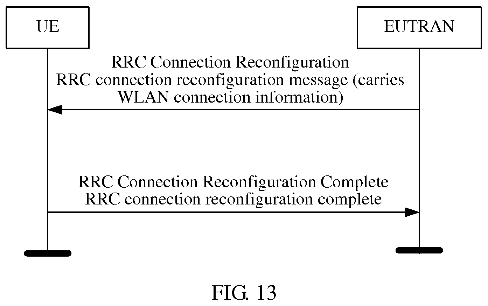

The access node of the cellular access network may send WLAN connection information to UE by using a message, such as an RB Establishment radio bearer establishment message or an RRC Connection Reconfiguration Radio Resource Control connection reconfiguration message, in air interface interaction between the access node and the UE, where the WLAN connection information may include: an identifier of the selected WLAN network and/or a realm name of a service provider. For example, refer to FIG. 13, which is a schematic diagram of instructing UE by an eNB by using an RRC Connection Reconfiguration (connection reconfiguration) message, where an identifier of a WLAN network may be one or a combination of an SSID, an SSID+HESSID, an OUI, a BSSID, and the like.

In this embodiment, further, the WLAN selection information further includes a realm name of a service provider; and
correspondingly, step 704 includes: instructing the UE to connect to the WLAN provided by the service provider.

706. The UE receives the indication sent by the access node of the cellular access network, where the indication includes connection information of a WLAN network that is selected by the access node of the cellular access network according to the wireless local area network WLAN selection information.

707. The UE connects to the WLAN network according to the connection information of the WLAN.

When the connection information of the WLAN further includes the realm name of the service provider, step 706 may include:
connecting, according to the information about the network and the realm name in the connection information of the WLAN, to the WLAN provided by the service provider.

In the foregoing descriptions, the WLAN selection information is transmitted between the PCRF and the MME/SGSN, and the access node of the cellular access network by using an existing standard interface message and process (between the eNB and the SRC), and the access node of the cellular access network sends an indication to instruct the UE to connect to the network. Certainly, in another implementation manner, in the present invention, the WLAN selection information may also be transmitted by using a newly added message, which is not specifically limited in the present invention.

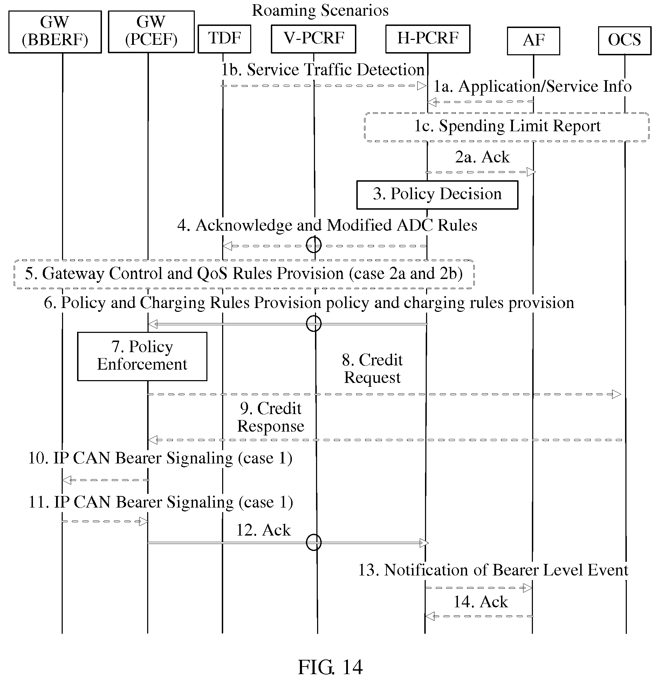

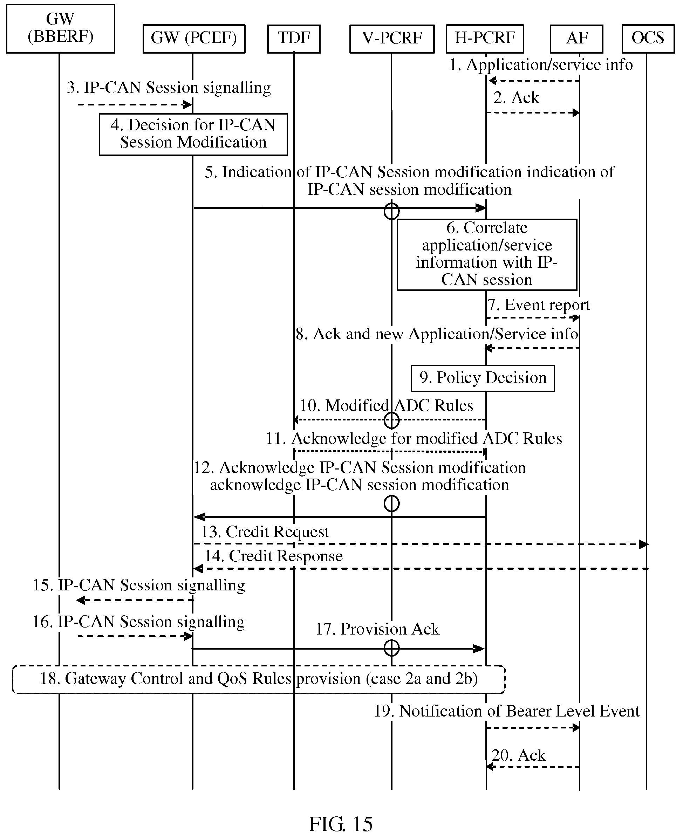

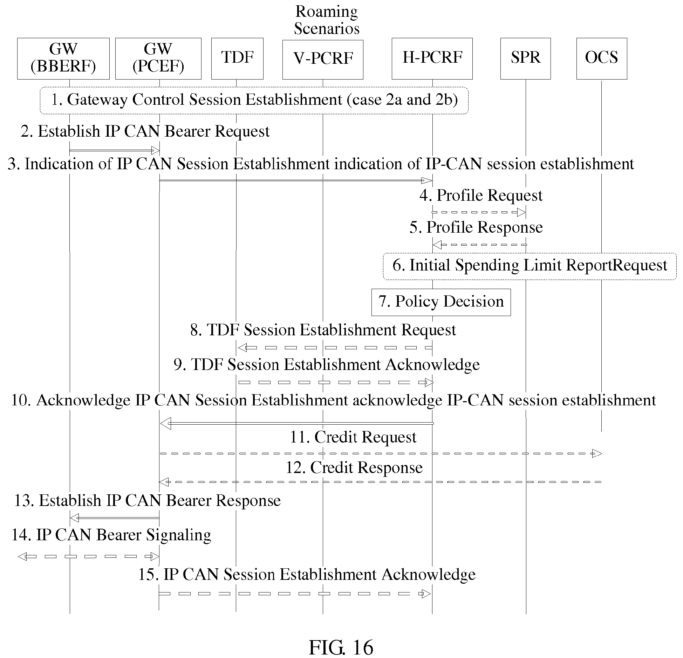

Moreover, notably, as shown in a rectangular box (A) in FIG. 9, rectangular boxes (A) and (B) in FIG. 10, and rectangular boxes (A) and (B) in FIG. 11, WLAN selection information is transmitted in an IP-CAN Session Modification session modification process between the PCRF/ANDSF and the PGW/PCEF. The IP-CAN Session Modification session modification process may be shown in FIG. 14 and FIG. 15. FIG. 14 is an IP-CAN session modification process initiated by the PCRF/ANDSF; therefore, the PCRF/ANDSF may add the WLAN selection information to a policy and charging rule provision message, and sends the message to the PGW/PCEF. FIG. 15 is an IP-CAN session modification process initiated by the PGW/PCEF; therefore, the PCRF/ANDSF may add the WLAN selection information to an IP-CAN session modification acknowledgement message, and sends the message to the PGW/PCEF. Certainly, in an IP-CAN session establishment process, WLAN selection information may also be transmitted. As shown in FIG. 16, the WLAN selection information may be added to an IP-CAN session establishment indication message and an IP-CAN session establishment acknowledgement message.

According to the foregoing method provided in this embodiment, an MME/SGSN acquires WLAN selection information, where the WLAN selection information includes priority information, and the priority information is used to indicate that connection of the UE to a WLAN has priority over connection of the UE to a cellular access network, and sends the WLAN selection information to an access node of the cellular access network; and the access node of the cellular access network selects a WLAN network for the UE according to the WLAN selection information and instructs the UE to connect to the selected WLAN network, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 6

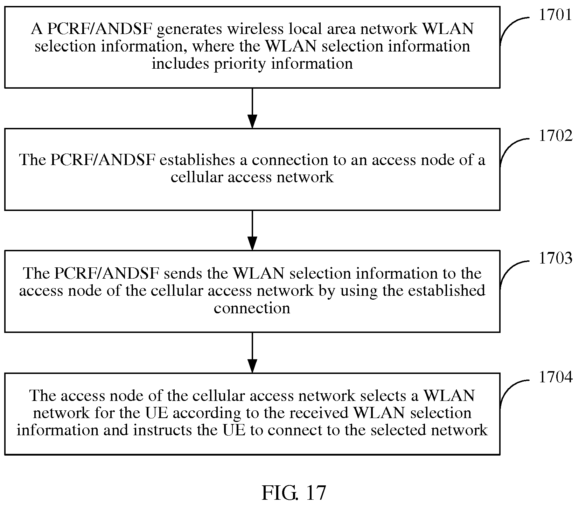

This embodiment provides a network selection method. In an implementation manner, referring to FIG. 17, the method includes:
1701. A PCRF/ANDSF generates wireless local area network WLAN selection information, where the WLAN selection information includes priority information, and the priority information is used to indicate that connection of the UE to a WLAN has priority over connection of the UE to the cellular access network.
1702. The PCRF/ANDSF establishes a connection to an access node of the cellular access network.

Specifically, this step may include:
a first manner: After an Internet Protocol-connectivity access network IP-CAN session of the UE is established, the PCRF/ANDSF sends a connection establishment message to the access node of the cellular access network, and establishes a connection to the access node of the cellular access network; or
a second manner: The PCRF/ANDSF receives a connection establishment message that is sent by the access node of the cellular access network after the UE is switched from an idle state to a connected state, and establishes a connection to the access node of the cellular access network.

In the foregoing two manners, transmit end addressing and receive end discovery are needed. In the first manner, the PCRF acquires location information of the UE from a PCEF by using a Gx interface, forms a route distinguisher by using a UE ID and the location information of the UE, and sends a message to a receive end. The UE ID in the route distinguisher may be a persistent identity, such as an IMSI (International Mobile SubscriberIdentification Number, international mobile subscriber identity), of the UE, or may be a temporary identifier generated for the UE by an MME or a network element, such as a base station or a controller, of the cellular access network. After being generated, the temporary identifier is sent to the PCEF, the PCEF sends the temporary identifier to the PCRF, and the PCRF binds the temporary identifier to the persistent identity, that is, the IMSI of the UE. If the temporary identifier is generated by an MME, the temporary identifier further needs to be sent to the cellular access network. The location information of the UE in the route distinguisher may be a cell identifier, a location area identifier, a routing area identifier, or a tracking area identifier of the UE that is reported by the PCEF to the PCRF, or may be an identifier that is of a controller, such as an RNC, a BSC, or an SRC, and is mapped by the PCRF according to the location information of the UE that is reported by the PCEF.

In the second manner, a network element, such as a base station or a controller, of the cellular access network forms a route distinguisher by using the UE ID, and sends a message to the receive end. The UE ID in the route distinguisher may be a persistent identity, such as an IMSI, of the UE, or may be a temporary identifier generated for the UE by an MME or the network element, such as a base station or a controller, of the cellular access network. After being generated, the temporary identifier is sent to the PCEF, the PCEF sends the temporary identifier to the PCRF, and the PCRF binds the temporary identifier to the persistent identity, that is, the IMSI of the UE. If the temporary identifier is generated by an MME, the temporary identifier further needs to be sent to the cellular access network. After a connection is established, the access node of the cellular access network may send, to the PCRF, an identifier of a cell, a location area, a routing area, or a tracking area in which the UE is located, or an identifier of a controller, such as an RNC, a BSC, or an SRC.

It should be noted that, in a routing network in which a connection establishment message is sent by using a temporary identifier, the persistent identity and the temporary identifier of the UE, and a combination of the persistent identity and the temporary identifier can all be routed to a connect receive end. If the temporary identifier of the UE is updated, a routing table of the routing network of the message also needs to be updated. The temporary identifier may include a device global unique identifier, a time, and a random number that are used to generate the temporary identifier, where the random number may also be replaced by a character that is not repeatedly used for a long time, or the like, which is not specifically limited in this embodiment.

1703. The PCRF/ANDSF sends the WLAN selection information to the access node of the cellular access network by using the established connection.

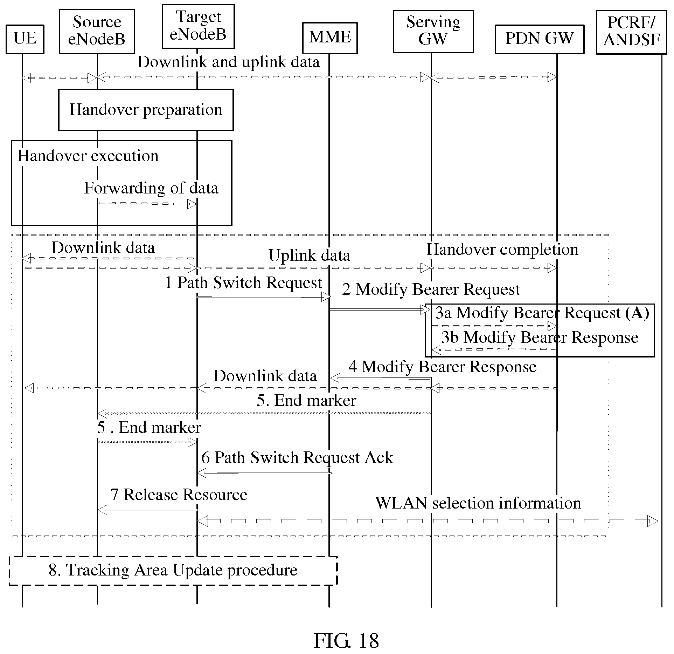

Refer to FIG. 18, which is a schematic diagram showing that a PCRF/ANDSF establishes a connection to an access node of a cellular access network, and sends the WLAN selection information to an eNB by using the established connection.

1704. After receiving the WLAN selection information, the access node of the cellular access network selects a network for the UE according to the WLAN selection information and instructs the UE to connect to the selected network.

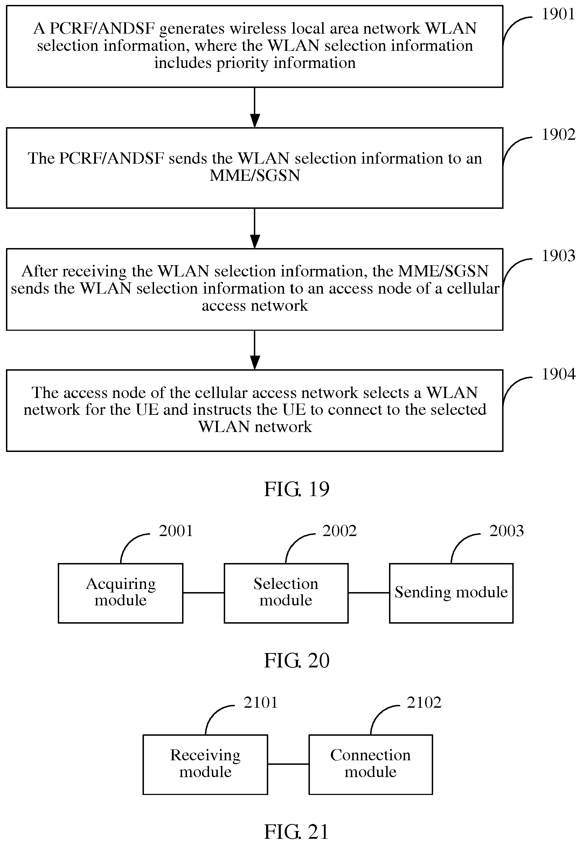

In another implementation manner, referring to FIG. 19, the method may include:
1901. A PCRF/ANDSF generates wireless local area network WLAN selection information, where the WLAN selection information includes priority information, and the priority information is used to indicate that connection of the UE to a WLAN has priority over connection of the UE to the cellular access network.
1902. The PCRF/ANDSF sends the WLAN selection information to a PGW, the PGW sends the WLAN selection information to an SGW, and the SGW sends the WLAN selection information to an MME/SGSN; or
the PCRF/ANDSF sends the WLAN selection information to a GGSN, the GGSN sends the WLAN selection information to an SGSN, and the SGSN sends the WLAN selection information to an access node of the cellular access network.

In this embodiment, the PCRF/ANDSF may send the WLAN selection information to a PGW (PDN Gateway, packet data network gateway)/PCEF (Policy and Charging Enforcement Function, policy and charging enforcement function) by using a Policy and Charging Rules Provision policy and charging rules provision message of a Gx interface. When a location that is of the UE and is reported by the PGW/PCEF to the PCRF/ANDSF changes, the PCRF/ANDSF may add the WLAN selection information to an IP CAN Session Modification response message that is sent to the PGW/PCEF, as shown in FIG. 10 or FIG. 11. The PGW/PCEF sends the WLAN selection information to the SGW (Serving Gateway, serving gateway) by using an Update Bearer Request message, and the SGW sends the WLAN selection information to the MME/SGSN.

In a UMTS network, the SGSN may send the WLAN selection information to an RNC/SRC by using an RAB assignment Request message. When the UMTS connects to an EPC (Evolved Packet Core, evolved packet core network), the SGSN receives the WLAN selection information from the SGW; and when the UMTS connects to a GPRS core network, the GGSN functions as the PCEF, the PCRF/ANDSF sends the WLAN selection information to the GGSN, and the GGSN then sends the WLAN selection information to the SGSN.

1903. After receiving the WLAN selection information, the MME/SGSN sends the WLAN selection information to the access node of the cellular access network.

1904. The access node of the cellular access network selects a network for the UE and instructs the UE to connect to the selected network.

In any one of the foregoing implementation manners, the generating, by a PCRF/ANDSF, WLAN selection information may include:
generating, by the PCRF/ANDSF, the WLAN selection information according to at least one of subscription information, a service usage status, location change information, or account information of the UE, or a network policy.

According to the foregoing method provided in this embodiment, a PCRF/ANDSF generates WLAN selection information, where the WLAN selection information includes priority information, and the priority information is used to indicate that connection of the UE to a WLAN has priority over connection of the UE to a cellular access network, and sends the WLAN selection information to an access node of the cellular access network, so that the access node of the cellular access network selects a WLAN network for the UE and instructs the UE to connect to the selected WLAN network, efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 7

Referring to FIG. 20, this embodiment provides a first apparatus for network selection, including:
an acquiring module 2001, configured to: after user equipment UE connects to a cellular access network, acquire wireless local area network WLAN selection information, where the WLAN selection information includes priority information, and the priority information is used to indicate that connection of the UE to a WLAN has priority over connection of the UE to the cellular access network;
a selection module 2002, configured to select a WLAN network for the UE according to the priority information, where a connection priority of the selected WLAN network is higher than a connection priority of the cellular access network; and
a sending module 2003, configured to instruct the UE to connect to the selected WLAN network.

In this embodiment, the WLAN selection information may be acquired by an MME/SGSN from subscription information of the UE sent by an HSS/HLR, or may be generated and sent to an MME/SGSN by a PCRF/ANDSF according to at least one of subscription information, a service usage status, location change information, or account information of the UE, or a network policy. After acquiring the WLAN selection information, the MME/SGSN may directly forward the WLAN selection information to the access node of the cellular access network, or may modify the WLAN selection information according to a local policy and then send modified WLAN selection information to the access node of the cellular access network, where, if the UE is in a roaming network, the local policy on which the MME/SGSN depends may be a policy selected by a WLAN and a cellular network of an operator of a visited place. The performing modification according to a local policy may be adjusting a radio access technology type and a WLAN priority order, or may be adjusting a priority order of different WLAN networks, or adding or barring some WLAN networks.

The WLAN selection information includes identifier information, such as an SSID (Service Set Identification, service set identifier), an SSID+HESSID (Homogenous Extended Service Set Identifier, homogenous extended service set identifier), an OUI (Organization Universal Identity, organization universal identity), a BSSID (Basic Service Set Identification, basic service set identifier), or the like, of the selected network. The priority information may be set according to different granularities as required, may be set according to a cellular network and a granularity of a WLAN, or may be set according to a cellular network and a granularity of a connection technology type of a WLAN, and further, the WLAN may further be divided into WLANs with different identifiers, and the like, which is not specifically limited in this embodiment.

With reference to the foregoing first apparatus, in a first implementation manner, the priority information includes priority information of at least two WLAN networks; and the selection module is configured to:
select, according to the priority information of the at least two WLAN networks, a WLAN network with the highest priority from the at least two WLAN networks.

With reference to the foregoing first apparatus or the first implementation manner, in a second implementation manner, the WLAN selection information further includes a load condition; and the selection module is configured to:
select a WLAN network for the UE according to the priority information and the load condition, where the selected WLAN network meets the load condition.

With reference to the foregoing first implementation manner, in a third implementation manner, the WLAN selection information further includes load information of the at least two WLAN networks; and the selection module is configured to:
select, according to the priority information of the at least two WLAN networks and the load information of the at least two WLAN networks, a WLAN network with the highest priority and the lowest load from the at least two WLAN networks.

With reference to the foregoing first apparatus or the first implementation manner, in a fourth implementation manner, the WLAN selection information further includes a signal quality condition; and the selection module is configured to:
select a WLAN network for the UE according to the priority information and the signal quality condition, where a signal received in the selected WLAN network by the UE meets the signal quality condition.

With reference to the foregoing fourth implementation manner, in a fifth implementation manner, the WLAN selection information further includes signal quality information of the at least two WLAN networks; and
the selection module is configured to:
select, according to the priority information of the at least two WLAN networks and the signal quality information of the at least two WLAN networks, a WLAN network with the highest priority and the best signal quality from the at least two WLAN networks.

With reference to the foregoing first apparatus, in a sixth implementation manner, the WLAN selection information further includes a location condition; and the selection module is configured to:
select a WLAN network for the UE according to the priority information and the location condition, where the UE is located inside an area indicated in the location condition or located outside an area indicated in the location condition.

Moreover, a network with the highest priority may be selected for the UE according to the wireless cellular connection technology type and WLAN priority information in a specified time period or at any moment except a specified time period.

In this embodiment, the foregoing load condition, signal quality condition, location condition, and specified time period may further be arbitrarily combined for an application, that is, the WLAN selection information may include any one or more of a load condition, a signal quality condition, a location condition, and a specified time period.

Specifically, that load of a WLAN meets the load condition may specifically include: the load of the WLAN is less than or greater than a set first threshold.

Specifically, that quality of a signal, in the WLAN, of the UE meets the signal quality condition may specifically include: quality of a signal received in the WLAN by the UE is less than or is greater than a set second threshold.

Specifically, an area indicated in the location condition includes but is not limited to: a specified location area (LA), a routing area (RA), a tracking area (TA), a controller (RNC ID, SRC ID), a base station (eNB, NodeB, BTS), or a cell (Cell).

With reference to the foregoing first apparatus, in a seventh implementation manner, the WLAN selection information further includes a realm name of a service provider; and
the sending module is configured to:
instruct the UE to connect to the WLAN provided by the service provider.

The realm name (realm name) of the service provider may be in a form of a list, and include one or more realm names. Specifically, the realm name may include a PLMN (Public Land Mobile Network, public land mobile network) ID. Further, priorities of service providers may be set, and the access node of the cellular access network selects, for the UE, according to WLAN information (a capability that a WLAN network supports connecting to a service provider, and the like) known by the access node of the cellular access network, a service provider used by a WLAN to which the UE connects, and sends the service provider to the UE, where there may be one or more service providers. Alternatively, a core network may specify, when WLAN selection information sent to the access node of the cellular access network includes an identifier of a WLAN network, a realm name of a service provider used by the UE when connecting to the WLAN network.

With reference to the foregoing first apparatus or any one of the foregoing implementation manners, in an eighth implementation manner, the acquiring module includes:
a first acquiring unit, configured to receive the WLAN selection information sent by a mobility management entity MME/serving general packet radio service support node SGSN; or
a second acquiring unit, configured to: after establishing a connection to a policy and charging rules function PCRF/access network discovery and selection function ANDSF, receive the WLAN selection information sent by the PCRF/ANDSF.

With reference to the foregoing first apparatus or any one of the first to the eighth implementation manners, in a ninth implementation manner, the priority information includes: a priority of a type of a connection technology for connecting to the cellular access network, and/or a priority of a type of a connection technology for connecting to the WLAN.

In this embodiment, the access node of the cellular access network may instruct, by using a message, such as an RB (Radio Bearer, radio bearer) Establishment establishment message or an RRC (Radio Resource Control, Radio Resource Control) Connection Reconfiguration connection reconfiguration message, in air interface interaction between the access node and the UE, the UE to connect to a network. Specifically, a selected network identifier and/or a realm name of a service provider may be added to the foregoing message.

The foregoing first apparatus provided in this embodiment may be applied in an access node of a cellular access network, and the first apparatus may perform the method provided in any one of the foregoing method embodiments; for a detailed process, refer to descriptions in the method embodiments, which is not described herein again.

According to the foregoing first apparatus provided in this embodiment, after UE connects to a cellular access network, WLAN selection information is acquired, where the WLAN selection information includes priority information, and the priority information is used to indicate that connection of the UE to a WLAN has priority over connection of the UE to the cellular access network, a WLAN network is selected for the UE according to the WLAN selection information, and the UE is instructed to connect to the selected WLAN network, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 8

Referring to FIG. 21, this embodiment provides a second apparatus for network selection, including:
a receiving module 2101, configured to receive an indication sent by an access node of a cellular access network, where the indication includes information about a WLAN network that is selected by the access node of the cellular access network according to wireless local area network WLAN selection information; and
a connection module 2102, configured to connect to the WLAN network according to the indication received by the receiving module, where
the WLAN selection information includes priority information, and the priority information is used to indicate that connection of the UE to a WLAN has priority over connection of the UE to the cellular access network.

With reference to the foregoing second apparatus, in a first implementation manner, the indication further includes a realm name of a service provider; and
the connection module is configured to:
connect, according to the information about the WLAN network and the realm name in the indication, to the WLAN provided by the service provider.

The realm name of the service provider may be in a form of a list, and include one or more realm names. Specifically, the realm name may include a PLMN (Public Land Mobile Network, public land mobile network) ID. Further, a network side may further set priorities of service providers, and the access node of the cellular access network selects, for the UE, according to WLAN information (a capability that a WLAN network supports connecting to a service provider, and the like) known by the access node of the cellular access network, a service provider used by a WLAN to which the UE connects, and sends the service provider to the UE, where there may be one or more service providers. Alternatively, a core network may specify, when WLAN selection information sent to the access node of the cellular access network includes an identifier of a WLAN network, a realm name of a service provider used by the UE when connecting to the WLAN network. After receiving the realm name, the UE may accurately connect, according to the realm name, to the WLAN provided by a corresponding service provider.

In this embodiment, when connecting to a WLAN network selected by the network side for the UE, the UE may generate an NAI (Network Access Identifier, network access identifier) by using the realm name, and perform authentication in the WLAN network by using the NAI. If the access node of the cellular access network sends multiple realm names of service providers, the UE selects, according to a realm name of a service provider and a priority that are stored in the UE, a realm name of a service provider with the highest priority from the multiple service providers, to generate an NAI, and performs authentication in the WLAN network by using the NAI.

With reference to the foregoing second apparatus or the first implementation manner, in a second implementation manner, the priority information includes: a priority of a type of a connection technology for connecting to the cellular access network, and/or a priority of a type of a connection technology for connecting to the WLAN.

The foregoing second apparatus provided in this embodiment may be applied in UE, and the second apparatus may perform the method provided in any one of the foregoing method embodiments; for a detailed process, refer to descriptions in the method embodiments, which is not described herein again.

The foregoing second apparatus provided in this embodiment receives an indication sent by an access node of a cellular access network, where the indication includes information about a WLAN network that is selected by a network side according to wireless local area network WLAN selection information, and connects to the WLAN network according to the indication, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 9

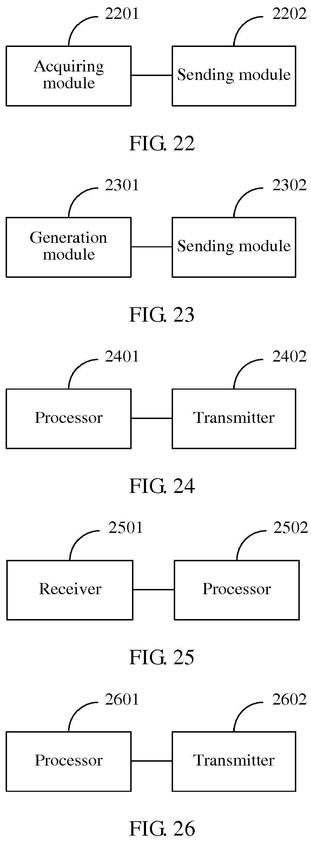

Referring to FIG. 22, this embodiment provides a third apparatus for network selection, including:
an acquiring module 2201, configured to acquire wireless local area network WLAN selection information, where the WLAN selection information includes priority information, and the priority information is used to indicate that connection of the UE to a WLAN has priority over connection of the UE to the cellular access network; and
a sending module 2202, configured to send the WLAN selection information to an access node of the cellular access network, where the WLAN selection information is used by the access node of the cellular access network to select a WLAN network for the UE and instruct the UE to connect to the selected WLAN network.

With reference to the foregoing third apparatus, in a first implementation manner, the acquiring module includes:
a first acquiring unit, configured to receive subscription information of the UE sent by a home subscriber server HSS, and acquire the WLAN selection information from the subscription information; or
a second acquiring unit, configured to receive the WLAN selection information sent by a policy and charging rules function PCRF/access network discovery and selection function ANDSF; or
a third acquiring unit, configured to: after handover of the UE occurs or the UE is moved to a new location, receive the WLAN selection information sent by an old MME/SGSN.

In this embodiment, the WLAN selection information may be acquired by an MME/SGSN from the subscription information of the UE sent by an HSS/HLR; or may be generated and sent to an MME/SGSN by the PCRF/ANDSF according to at least one of the subscription information, a service usage status, location change information, or account information of the UE, or a network policy; or may be acquired from the old MME/SGSN after the handover of the UE occurs or the UE is moved to the new location. After acquiring the WLAN selection information, the MME/SGSN may directly forward the WLAN selection information to the access node of the cellular access network, or may modify the WLAN selection information according to a local policy and then send modified WLAN selection information to the access node of the cellular access network, where, if the UE is in a roaming network, the local policy on which the MME/SGSN depends may be a policy selected by a WLAN and a cellular network of an operator of a visited place. The performing modification according to a local policy may be adjusting a radio access technology type and a WLAN priority order, or may be adjusting a priority order of different WLAN networks, or adding or barring some WLAN networks.

With reference to the foregoing third apparatus, in a second implementation manner, the sending module includes:
a first sending unit, configured to: when the UE is switched from an idle state to a connected state, send the WLAN selection information to a cellular base station by using an initial context setup request message; or
a second sending unit, configured to send the WLAN selection information to a cellular controller by using a radio access bearer assignment request message; or
a third sending unit, configured to send the WLAN selection information to the access node of the cellular access network by using a bearer modify request message; or
a fourth sending unit, configured to send the WLAN selection information to the access node of the cellular access network by using a downlink non-access stratum NAS transport message; or
a fifth sending unit, configured to send the WLAN selection information to the access node of the cellular access network by using a UE context modify request message.

With reference to the foregoing third apparatus, in a third implementation manner, the third apparatus further includes:
a modification module, configured to: after the acquiring module acquires the WLAN selection information, modify the WLAN selection information according to a local policy; and
correspondingly, the sending module is configured to:
   send modified WLAN selection information to the access node of the cellular access network.

With reference to the foregoing third apparatus or any one of the first to the third implementation manners, in a fourth implementation manner, the priority information includes: a priority of a type of a connection technology for connecting to the cellular access network, and/or a priority of a type of a connection technology for connecting to the WLAN.

The foregoing third apparatus provided in this embodiment may be applied in an MME/SGSN, and the third apparatus may perform the method provided in any one of the foregoing method embodiments; for a detailed process, refer to descriptions in the method embodiments, which is not described herein again.

The foregoing third apparatus provided in this embodiment acquires WLAN selection information, where the WLAN selection information includes priority information, and the priority information is used to indicate that connection of user equipment UE to a WLAN has priority over connection of the UE to the cellular access network, and sends the WLAN selection information to an access node of the cellular access network, so that the access node of the cellular access network selects a WLAN network for the UE and instructs the UE to connect to the selected WLAN network, efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 10

Referring to FIG. 23, this embodiment provides a fourth apparatus for network selection, including:
a generation module 2301, configured to generate wireless local area network WLAN selection information, where the WLAN selection information includes priority information, and the priority information is used to indicate that connection of the UE to a WLAN has priority over connection of the UE to the cellular access network; and
a sending module 2302, configured to send the WLAN selection information generated by the generation module to an access node of the cellular access network, where the WLAN selection information is used by the access node of the cellular access network to select a WLAN network for the UE and instruct the UE to connect to the selected WLAN network.

With reference to the foregoing fourth apparatus, in a first implementation manner, the sending module includes:
a connection establishing unit, configured to establish a connection to the access node of the cellular access network; and
a first sending unit, sending the WLAN selection information to the access node of the cellular access network by using the established connection; or
the sending module includes:
   a second sending unit, configured to send the WLAN selection information to a mobility management entity MME/serving general packet radio service support node SGSN by using a packet data network gateway PGW and a serving gateway SGW, and send the WLAN selection information to the access node of the cellular access network by using the MME/SGSN; or send the WLAN selection information to a serving general packet radio service support node SGSN by using a gateway general packet radio service support node GGSN, and send the WLAN selection information to the access node of the cellular access network by using the SGSN.

With reference to the foregoing first implementation manner, in a second implementation manner, the connection establishing unit is configured to:
after an Internet Protocol-connectivity access network IP-CAN session of the UE is established, send a connection establishment message to the access node of the cellular access network, and establish a connection to the access node of the cellular access network; or
receive a connection establishment message that is sent by the access node of the cellular access network after the UE is switched from an idle state to a connected state, and establish a connection to the access node of the cellular access network.

With reference to the foregoing fourth apparatus, in a third implementation manner, the generation module is configured to:
generate the WLAN selection information according to at least one of subscription information, a service usage status, location change information, or account information of the UE, or a network policy.

The subscription information of the UE includes but is not limited to information about, such as a traffic package or a duration package, of the UE. The location change information of the UE includes but is not limited to: whether the UE is located in a specified location area, a routing area, a tracking area, or a cell. The account information includes but is not limited to: balance information of an account of a user. The network policy includes but is not limited to: a network load balancing policy. For example, in an initial case, in WLAN selection information of the UE, a priority of a cellular network is higher than a priority of a WLAN, when a cellular network traffic package or duration package of the UE in the package period has been used up or is to be used up, a cellular network usage fee of the UE is to be increased or a cellular network speed is to be decreased, and the PCRF obtains a package usage state of the UE from a billing system, and triggers the WLAN selection information to be adjusted to WLAN selection information in which the priority of the WLAN is higher than the priority of the cellular network.

With reference to the foregoing fourth apparatus or any one of the first to the third implementation manners, in a fourth implementation manner, the priority information includes: a priority of a type of a connection technology for connecting to the cellular access network, and/or a priority of a type of a connection technology for connecting to the WLAN.

The foregoing fourth apparatus provided in this embodiment may be applied in a PCRF/ANDSF, and the fourth apparatus may perform the method provided in any one of the foregoing method embodiments; for a detailed process, refer to descriptions in the method embodiments, which is not described herein again.

The foregoing fourth apparatus provided in this embodiment generates WLAN selection information, where the WLAN selection information includes priority information, and the priority information is used to indicate that connection of user equipment UE to a WLAN has priority over connection of the UE to the cellular access network, and sends the WLAN selection information to an access node of the cellular access network, so that the access node of the cellular access network selects a WLAN network for the UE and instructs the UE to connect to the selected WLAN network, efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 11

Referring to FIG. 24, this embodiment provides an access node of a cellular access network, including:
a processor 2401, configured to: after user equipment UE connects to the cellular access network, acquire wireless local area network WLAN selection information, where the WLAN selection information includes priority information, and the priority information is used to indicate that connection of the UE to a WLAN has priority over connection of the UE to the cellular access network; select a WLAN network for the UE according to the priority information, where a connection priority of the selected WLAN network is higher than a connection priority of the cellular access network; and
a transmitter 2402, configured to instruct the UE to connect to the selected network.

In this embodiment, the WLAN selection information may be acquired by an MME/SGSN from subscription information of the UE sent by an HSS/HLR, or may be generated and sent to an MME/SGSN by a PCRF/ANDSF according to at least one of subscription information, a service usage status, location change information, or account information of the UE, or a network policy. After acquiring the WLAN selection information, the MME/SGSN may directly forward the WLAN selection information to the access node of the cellular access network, or may modify the WLAN selection information according to a local policy and then send modified WLAN selection information to the access node of the cellular access network, where, if the UE is in a roaming network, the local policy on which the MME/SGSN depends may be a policy selected by a WLAN and a cellular network of an operator of a visited place. The performing modification according to a local policy may be adjusting a radio access technology type and a WLAN priority order, or may be adjusting a priority order of different WLAN networks, or adding or barring some WLAN networks.

The WLAN selection information includes identifier information, such as an SSID (Service Set Identification, service set identifier), an SSID+HESSID (Homogenous Extended Service Set Identifier, homogenous extended service set identifier), an OUI (Organization Universal Identity, organization universal identity), a BSSID (Basic Service Set Identification, basic service set identifier), or the like, of the selected network. The priority information may be set according to different granularities as required, may be set according to a cellular network and a granularity of a WLAN, or may be set according to a cellular network and a granularity of a connection technology type of a WLAN, and further, the WLAN may further be divided into WLANs with different identifiers, and the like, which is not specifically limited in this embodiment.

With reference to the foregoing access node of the cellular access network, in a first implementation manner, the priority information includes priority information of at least two WLAN networks; and the processor is configured to:
select, according to the priority information of the at least two WLAN networks, a WLAN network with the highest priority from the at least two WLAN networks.

With reference to the foregoing access node of the cellular access network or the first implementation manner, in a second implementation manner, the WLAN selection information further includes a load condition; and the processor is configured to: select a WLAN network for the UE according to the priority information and the load condition, where the selected WLAN network meets the load condition.

With reference to the foregoing first implementation manner, in a third implementation manner, the WLAN selection information further includes load information of the at least two WLAN networks; and the processor is configured to:
select, according to the priority information of the at least two WLAN networks and the load information of the at least two WLAN networks, a WLAN network with the highest priority and the lowest load from the at least two WLAN networks.

With reference to the foregoing access node of the cellular access network or the first implementation manner, in a fourth implementation manner, the WLAN selection information further includes a signal quality condition; and the processor is configured to: select a WLAN network for the UE according to the priority information and the signal quality condition, where a signal received in the selected WLAN network by the UE meets the signal quality condition.

With reference to the foregoing fourth implementation manner, in a fifth implementation manner, the WLAN selection information further includes signal quality information of the at least two WLAN networks; and the processor is configured to:
select, according to the priority information of the at least two WLAN networks and the signal quality information of the at least two WLAN networks, a WLAN network with the highest priority and the best signal quality from the at least two WLAN networks.

With reference to the foregoing first apparatus, in a sixth implementation manner, the WLAN selection information further includes a location condition; and the processor is configured to:
select a WLAN network for the UE according to the priority information and the location condition, where the UE is located inside an area indicated in the location condition or located outside an area indicated in the location condition.

Moreover, a network with the highest priority may be selected for the UE according to the wireless cellular connection technology type and WLAN priority information in a specified time period or at any moment except a specified time period.

In this embodiment, the foregoing load condition, signal quality condition, location condition, and specified time period may further be arbitrarily combined for an application, that is, the WLAN selection information may include any one or more of a load condition, a signal quality condition, a location condition, and a specified time period.

Specifically, that load of a WLAN meets the load condition may specifically include: the load of the WLAN is less than or greater than a set first threshold.

Specifically, that quality of a signal, in the WLAN, of the UE meets the signal quality condition may specifically include: quality of a signal received in the WLAN by the UE is less than or is greater than a set second threshold.

Specifically, an area indicated in the location condition includes but is not limited to: a specified location area (LA), a routing area (RA), a tracking area (TA), a controller (RNC ID, SRC ID), a base station (eNB, NodeB, BTS), or a cell (Cell).

With reference to the foregoing access node of the cellular access network, in a seventh implementation manner, the WLAN selection information further includes a realm name of a service provider; and
the transmitter is configured to:
instruct the UE to connect to the WLAN provided by the service provider.

The realm name (realm name) of the service provider may be in a form of a list, and include one or more realm names. Specifically, the realm name may include a PLMN (Public Land Mobile Network, public land mobile network) ID. Further, priorities of service providers may be set, and the access node of the cellular access network selects, for the UE, according to WLAN information (a capability that a WLAN network supports connecting to a service provider, and the like) known by the access node of the cellular access network, a service provider used by a WLAN to which the UE connects, and sends the service provider to the UE, where there may be one or more service providers. Alternatively, a core network may specify, when WLAN selection information sent to the access node of the cellular access network includes an identifier of a WLAN network, a realm name of a service provider used by the UE when connecting to the WLAN network.

With reference to the foregoing access node of the cellular access network, in an eighth implementation manner, a receiver is further included, where
the receiver is configured to:
receive the WLAN selection information sent by a mobility management entity MME/serving general packet radio service support node SGSN; or
after establishing a connection to a policy and charging rules function PCRF/access network discovery and selection function ANDSF, receive the WLAN selection information sent by the PCRF/ANDSF.

With reference to the foregoing access node of the cellular access network or any one of the first to the eighth implementation manners, in a ninth implementation manner, the priority information includes: a priority of a type of a connection technology for connecting to the cellular access network, and/or a priority of a type of a connection technology for connecting to the WLAN.

In this embodiment, the access node of the cellular access network may instruct, by using a message, such as an RB (Radio Bearer, radio bearer) Establishment establishment message or an RRC (Radio Resource Control, Radio Resource Control) Connection Reconfiguration connection reconfiguration message, in air interface interaction between the access node and the UE, the UE to connect to a network. Specifically, a selected network identifier and/or a realm name of a service provider may be added to the foregoing message.

The foregoing access node of the cellular access network provided in this embodiment may perform the method provided in any one of the foregoing method embodiments; for a detailed process, refer to descriptions in the method embodiments, which is not described herein again.

The foregoing access node of the cellular access network provided in this embodiment acquires, after UE connects to the cellular access network, WLAN selection information, where the WLAN selection information includes priority information, and the priority information is used to indicate that connection of the UE to a WLAN has priority over connection of the UE to the cellular access network, selects a WLAN network for the UE according to the WLAN selection information, and instructs the UE to connect to the selected WLAN network, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 12

Referring to FIG. 25, this embodiment provides UE, including:
a receiver 2501, configured to receive an indication sent by an access node of a cellular access network, where the indication includes information about a WLAN network that is selected by the access node of the cellular access network according to wireless local area network WLAN selection information; and
a processor 2502, configured to connect to the WLAN network according to the indication, where
the WLAN selection information includes priority information, and the priority information is used to indicate that connection of the UE to a WLAN has priority over connection of the UE to the cellular access network.

With reference to the foregoing UE, in a first implementation manner, the indication further includes a realm name of a service provider; and
the processor is configured to:
connect, according to the information about the network and the realm name in the indication, to the WLAN provided by the service provider.

The realm name of the service provider may be in a form of a list, and include one or more realm names. Specifically, the realm name may include a PLMN (Public Land Mobile Network, public land mobile network) ID. Further, a network side may further set priorities of service providers, and the access node of the cellular access network selects, for the UE, according to WLAN information (a capability that a WLAN network supports connecting to a service provider, and the like) known by the access node of the cellular access network, a service provider used by a WLAN to which the UE connects, and sends the service provider to the UE, where there may be one or more service providers. Alternatively, a core network may specify, when WLAN selection information sent to the access node of the cellular access network includes an identifier of a WLAN network, a realm name of a service provider used by the UE when connecting to the WLAN network. After receiving the realm name, the UE may accurately connect, according to the realm name, to the WLAN provided by a corresponding service provider.

In this embodiment, when connecting to a WLAN network selected by the network side for the UE, the UE may generate an NAI (Network Access Identifier, network access identifier) by using the realm name, and perform authentication in the WLAN network by using the NAI. If the access node of the cellular access network sends multiple realm names of service providers, the UE selects, according to a realm name of a service provider and a priority that are stored in the UE, a realm name of a service provider with the highest priority from the multiple service providers, to generate an NAI, and performs authentication in the WLAN network by using the NAI.

With reference to the foregoing UE or the first implementation manner, in a second implementation manner, the priority information includes: a priority of a type of a connection technology for connecting to the cellular access network, and/or a priority of a type of a connection technology for connecting to the WLAN.

The foregoing UE provided in this embodiment may perform the method provided in any one of the foregoing method embodiments; for a detailed process, refer to descriptions in the method embodiments, which is not described herein again.

The foregoing UE provided in this embodiment receives an indication sent by an access node of a cellular access network, where the indication includes information about a WLAN network that is selected by a network side according to wireless local area network WLAN selection information, and connects to the WLAN network according to the indication, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 13

Referring to FIG. 26, this embodiment provides a mobility management network element, including:
a processor 2601, configured to acquire wireless local area network WLAN selection information, where the WLAN selection information includes priority information, and the priority information is used to indicate that connection of the UE to a WLAN has priority over connection of the UE to the cellular access network; and
a transmitter 2602, configured to send the WLAN selection information to an access node of the cellular access network, where the WLAN selection information is used by the access node of the cellular access network to select a WLAN network for the UE and instruct the UE to connect to the selected WLAN network.

With reference to the foregoing mobility management network element, in a first implementation manner, the mobility management network element further includes a receiver, where
the receiver is configured to receive subscription information of the UE sent by a home subscriber server HSS; and correspondingly, the processor acquires the WLAN selection information from the subscription information; or
the receiver is configured to receive the WLAN selection information sent by a policy and charging rules function PCRF/access network discovery and selection function ANDSF; or
the receiver is configured to: after handover of the UE occurs or the UE is moved to a new location, receive the WLAN selection information sent by an old mobility management network element.

In this embodiment, the mobility management network element may be specifically an MME/SGSN.

In this embodiment, the WLAN selection information may be acquired by the MME/SGSN from the subscription information of the UE sent by the HSS/HLR; or may be generated and sent to the MME/SGSN by the PCRF/ANDSF according to at least one of the subscription information, a service usage status, location change information, or account information of the UE, or a network policy; or may be acquired from the old MME/SGSN after the handover of the UE occurs or the UE is moved to the new location. After acquiring the WLAN selection information, the MME/SGSN may directly forward the WLAN selection information to the access node of the cellular access network, or may modify the WLAN selection information according to a local policy and then send modified WLAN selection information to the access node of the cellular access network, where, if the UE is in a roaming network, the local policy on which the MME/SGSN depends may be a policy selected by a WLAN and a cellular network of an operator of a visited place. The performing modification according to a local policy may be adjusting a radio access technology type and a WLAN priority order, or may be adjusting a priority order of different WLAN networks, or adding or barring some WLAN networks.

With reference to the foregoing mobility management network element, in a second implementation manner, the transmitter is configured to:
when the UE is switched from an idle state to a connected state, send the WLAN selection information to a cellular base station by using an initial context setup request message; or
send the WLAN selection information to a cellular controller by using a radio access bearer assignment request message; or
send the WLAN selection information to the access node of the cellular access network by using a bearer modify request message; or
send the WLAN selection information to the access node of the cellular access network by using a downlink non-access stratum NAS transport message; or
send the WLAN selection information to the access node of the cellular access network by using a UE context modify request message.

With reference to the foregoing mobility management network element, in a third implementation manner, the processor is further configured to:
after acquiring the WLAN selection information, modify the WLAN selection information according to a local policy; and
correspondingly, the transmitter is configured to:
   send modified WLAN selection information to the access node of the cellular access network.

With reference to the foregoing mobility management network element or any one of the first to the third implementation manners, in a fourth implementation manner, the priority information includes: a priority of a type of a connection technology for connecting to the cellular access network, and/or a priority of a type of a connection technology for connecting to the WLAN.

The foregoing mobility management network element provided in this embodiment may perform the method provided in any one of the foregoing method embodiments; for a detailed process, refer to descriptions in the method embodiments, which is not described herein again.

The foregoing mobility management network element provided in this embodiment acquires WLAN selection information, where the WLAN selection information includes priority information, and the priority information is used to indicate that connection of user equipment UE to a WLAN has priority over connection of the UE to the cellular access network, and sends the WLAN selection information to an access node of the cellular access network, so that the access node of the cellular access network selects a WLAN network for the UE and instructs the UE to connect to the selected WLAN network, efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 14

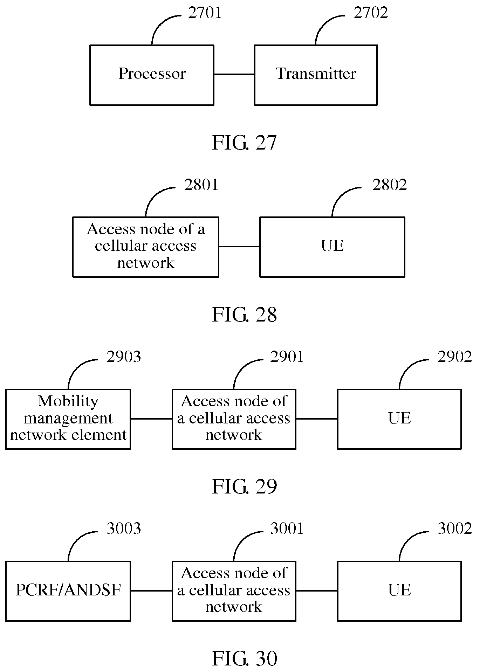

Referring to FIG. 27, this embodiment provides a PCRF/ANDSF, including:
a processor 2701, configured to generate wireless local area network WLAN selection information, where the WLAN selection information includes priority information, and the priority information is used to indicate that connection of the UE to a WLAN has priority over connection of the UE to the cellular access network; and
a transmitter 2702, configured to send the WLAN selection information to an access node of the cellular access network, where the WLAN selection information is used by the access node of the cellular access network to select a WLAN network for the UE and instruct the UE to connect to the selected WLAN network.

With reference to the foregoing PCRF/ANDSF, in a first implementation manner, the transmitter is configured to:
establish a connection to the access node of the cellular access network; and
send the WLAN selection information to the access node of the cellular access network by using the established connection; or
the transmitter is configured to:
   send the WLAN selection information to a mobility management entity MME/serving general packet radio service support node SGSN by using a packet data network gateway PGW and a serving gateway SGW, and send the WLAN selection information to the access node of the cellular access network by using the MME/SGSN; or send the WLAN selection information to a serving general packet radio service support node SGSN by using a gateway general packet radio service support node GGSN, and send the WLAN selection information to the access node of the cellular access network by using the SGSN.

With reference to the foregoing first implementation manner, in a second implementation manner, the transmitter is configured to:
after an Internet Protocol-connectivity access network IP-CAN session of the UE is established, send a connection establishment message to the access node of the cellular access network, and establish a connection to the access node of the cellular access network; or
the PCRF/ANDSF further includes a receiver, where the receiver is configured to receive a connection establishment message that is sent by the access node of the cellular access network after the UE is switched from an idle state to a connected state; and correspondingly, the transmitter and the receiver are configured to establish a connection to the access node of the cellular access network.

With reference to the foregoing PCRF/ANDSF, in a third implementation manner, the processor is configured to:
generate the WLAN selection information according to at least one of subscription information, a service usage status, location change information, or account information of the UE, or a network policy.

The subscription information of the UE includes but is not limited to information about, such as a traffic package or a duration package, of the UE. The location change information of the UE includes but is not limited to: whether the UE is located in a specified location area, a routing area, a tracking area, or a cell. The account information includes but is not limited to: balance information of an account of a user. The network policy includes but is not limited to: a network load balancing policy. For example, in an initial case, in WLAN selection information of the UE, a priority of a cellular network is higher than a priority of a WLAN, when a cellular network traffic package or duration package of the UE in the package period has been used up or is to be used up, a cellular network usage fee of the UE is to be increased or a cellular network speed is to be decreased, and the PCRF obtains a package usage state of the UE from a billing system, and triggers the WLAN selection information to be adjusted to WLAN selection information in which the priority of the WLAN is higher than the priority of the cellular network.

With reference to the foregoing PCRF/ANDSF or any one of the first to the third implementation manners, in a fourth implementation manner, the priority information includes: a priority of a type of a connection technology for connecting to the cellular access network, and/or a priority of a type of a connection technology for connecting to the WLAN.

The foregoing PCRF/ANDSF provided in this embodiment may perform the method provided in any one of the foregoing method embodiments; for a detailed process, refer to descriptions in the method embodiments, which is not described herein again.

The foregoing PCRF/ANDSF provided in this embodiment generates WLAN selection information, where the WLAN selection information includes priority information, and the priority information is used to indicate that connection of user equipment UE to a WLAN has priority over connection of the UE to the cellular access network, and sends the WLAN selection information to an access node of the cellular access network, so that the access node of the cellular access network selects a WLAN network for the UE and instructs the UE to connect to the selected WLAN network, efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 15

Referring to FIG. 28, this embodiment provides a network selection system, including: an access node 2801 of a cellular access network, and user equipment UE 2802, where
the access node 2801 of the cellular access network may be the access node of a cellular access network according to Embodiment 11, or may be the access node of a cellular access network including the first apparatus according to Embodiment 7; and
the UE 2802 may be the UE according to Embodiment 12, or may be the UE including the second apparatus according to Embodiment 8.

The foregoing system provided in this embodiment may perform the method provided in any one of the foregoing method embodiments; for a detailed process, refer to descriptions in the method embodiments, which is not described herein again.

The foregoing system provided in this embodiment acquires, after UE connects to a cellular access network, WLAN selection information by using an access node of the cellular access network, where the WLAN selection information includes priority information, and the priority information is used to indicate that connection of user equipment UE to a WLAN has priority over connection of the UE to the cellular access network, selects a WLAN network for the UE according to the WLAN selection information, and instructs the UE to connect to the selected WLAN network; and after receiving the indication, the UE connects, according to the indication, to a network selected by a network side, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 16

Referring to FIG. 29, this embodiment provides a network selection system, including: an access node 2901 of a cellular access network, user equipment UE 2902, and a mobility management network element 2903, where
the access node 2901 of the cellular access network includes the access node of a cellular access network according to Embodiment 11, or may be the access node of a cellular access network including the first apparatus according to Embodiment 7;
the UE 2902 may be the UE according to Embodiment 12, or may be the UE including the second apparatus according to Embodiment 8; and
the mobility management network element 2903 may be the mobility management network element according to Embodiment 13, or may be the mobility management network element including the third apparatus according to Embodiment 9.

The foregoing system provided in this embodiment may perform the method provided in any one of the foregoing method embodiments; for a detailed process, refer to descriptions in the method embodiments, which is not described herein again.

The foregoing system provided in this embodiment acquires, after UE connects to a cellular access network, WLAN selection information by using a mobility management network element and sends the WLAN selection information to an access node of the cellular access network, where the WLAN selection information includes priority information, and the priority information is used to indicate that connection of user equipment UE to a WLAN has priority over connection of the UE to the cellular access network; the access node of the cellular access network selects a network for the UE according to the WLAN selection information, and instructs the UE to connect to the selected network; and after receiving the indication, the UE connects, according to the indication, to a network selected by a network side, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

### Embodiment 17

Referring to FIG. 30, this embodiment provides a network selection system, including: an access node 3001 of a cellular access network, user equipment UE 3002, and a policy and charging rules function PCRF/access network discovery and selection function ANDSF 3003, where
the access node 3001 of the cellular access network includes the access node of a cellular access network according to Embodiment 11, or may be the access node of a cellular access network including the first apparatus according to Embodiment 7;
the UE 3002 may be the UE according to Embodiment 12, or may be the UE including the second apparatus according to Embodiment 8; and
the PCRF/ANDSF 3003 may be the PCRF/ANDSF according to Embodiment 14, or may be the PCRF/ANDSF including the fourth apparatus according to Embodiment 10.

The foregoing system provided in this embodiment may perform the method provided in any one of the foregoing method embodiments; for a detailed process, refer to descriptions in the method embodiments, which is not described herein again.

The foregoing system provided in this embodiment generates WLAN selection information by using a PCRF/ANDSF, where the WLAN selection information includes priority information, and the priority information is used to indicate that connection of user equipment UE to a WLAN has priority over connection of the UE to the cellular access network, and sends the WLAN selection information to an access node of the cellular access network; after receiving the WLAN selection information, the access node of the cellular access network selects a network for the UE and instructs the UE to connect to the selected network; and the UE connects to the network according to the indication, so that efficiency of connecting to a network by UE is improved, behavior of the UE is controllable, and the UE is accurately instructed to connect to the network and can automatically implement the connection; therefore, not only an electric quantity is saved for the UE, but also efficiency of the UE and user experience are improved. Moreover, the UE can further access and use a service in a WLAN, which effectively improves a success rate of connecting to the WLAN by the UE and utilization of the WLAN network, so that the WLAN network can effectively offload data usage pressure for a cellular network, thereby improving a throughput of an entire network.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A network selection method, wherein the method comprises:
after user equipment UE connects to a cellular access network, acquiring, by an access node of the cellular access network, wireless local area network WLAN selection information, wherein the WLAN selection information comprises priority information, and the priority information is used to indicate that connection of the UE to a WLAN has priority over connection of the UE to the cellular access network;
selecting, by the access node of the cellular access network, a WLAN network for the UE according to the priority information, wherein a connection priority of the selected WLAN network is higher than a connection priority of the cellular access network; and
instructing, by the access node of the cellular access network, the UE to connect to the selected WLAN network.

2. The method according to claim 1, wherein the priority information comprises priority information of at least two WLAN networks; and
the selecting a WLAN network for the UE according to the priority information comprises:
selecting, according to the priority information of the at least two WLAN networks, a WLAN network with the highest priority from the at least two WLAN networks.

3. The method according to claim 1 or 2, wherein the WLAN selection information further comprises a load condition; and
the selecting a WLAN network for the UE according to the priority information comprises:
selecting a WLAN network for the UE according to the priority information and the load condition, wherein the selected WLAN network meets the load condition.

4. The method according to claim 2, wherein the WLAN selection information further comprises load information of the at least two WLAN networks; and
the selecting a WLAN network for the UE according to the priority information comprises:
selecting, according to the priority information of the at least two WLAN networks and the load information of the at least two WLAN networks, a WLAN network with the highest priority and the lowest load from the at least two WLAN networks.

5. The method according to claim 1 or 2, wherein the WLAN selection information further comprises a signal quality condition; and
the selecting a WLAN network for the UE according to the priority information comprises:
selecting a WLAN network for the UE according to the priority information and the signal quality condition, wherein a signal received in the selected WLAN network by the UE meets the signal quality condition.

6. The method according to claim 5, wherein the WLAN selection information further comprises signal quality information of the at least two WLAN networks; and
the selecting a WLAN network for the UE according to the priority information comprises:
selecting, according to the priority information of the at least two WLAN networks and the signal quality information of the at least two WLAN networks, a WLAN network with the highest priority and the best signal quality from the at least two WLAN networks.

7. The method according to claim 1, wherein the WLAN selection information further comprises a location condition; and
the selecting a WLAN network for the UE according to the priority information comprises:
selecting a WLAN network for the UE according to the priority information and the location condition, wherein the UE is located inside an area indicated in the location condition or located outside an area indicated in the location condition.

8. The method according to any one of claims 1 to 7, wherein the WLAN selection information further comprises a realm name of a service provider; and
the instructing, by the access node of the cellular access network, the UE to connect to the selected WLAN network comprises:
instructing, by the access node of the cellular access network, the UE to connect to the selected WLAN network provided by the service provider.

9. The method according to any one of claims 1 to 7, wherein the acquiring, by an access node of the cellular access network, wireless local area network WLAN selection information comprises:
receiving, by the access node of the cellular access network, the WLAN selection information sent by a mobility management entity MME or a serving general packet radio service support node SGSN; or
after establishing a connection to a policy and charging rules function PCRF or an access network discovery and selection function ANDSF, receiving, by the access node of the cellular access network, the WLAN selection information sent by the PCRF or the ANDSF.

10. The method according to any one of claims 1 to 9, wherein the priority information comprises:
a priority of a type of a connection technology for connecting to the cellular access network, and/or a priority of a type of a connection technology for connecting to the WLAN.

11. A network selection method, wherein the method comprises:
receiving an indication sent by an access node of a cellular access network, wherein the indication comprises information about a WLAN network that is selected by the access node of the cellular access network according to wireless local area network WLAN selection information; and
connecting to the WLAN network according to the indication, wherein
the WLAN selection information comprises priority information, and the priority information is used to indicate that connection of the UE to a WLAN has priority over connection of the UE to the cellular access network.

12. The method according to claim 11, wherein the indication further comprises a realm name of a service provider; and
the connecting to the WLAN network according to the indication comprises:
connecting, according to the information about the WLAN network and the realm name in the indication, to the WLAN provided by the service provider.

13. The method according to claim 11 or 12, wherein the priority information comprises: a priority of a type of a connection technology for connecting to the cellular access network, and/or a priority of a type of a connection technology for connecting to the WLAN.

14. A network selection method, wherein the method comprises:
acquiring, by a mobility management network element, wireless local area network WLAN selection information, wherein the WLAN selection information comprises priority information, and the priority information is used to indicate that connection of user equipment UE to a WLAN has priority over connection of the UE to the cellular access network; and
sending, by the mobility management network element, the WLAN selection information to an access node of the cellular access network, wherein the WLAN selection information is used by the access node of the cellular access network to select a WLAN network for the UE and instruct the UE to connect to the selected WLAN network.

15. The method according to claim 14, wherein the acquiring, by a mobility management network element, WLAN selection information comprises:
receiving, by the mobility management network element, subscription information of the UE sent by a home subscriber server HSS, and acquiring the WLAN selection information from the subscription information; or
receiving, by the mobility management network element, the WLAN selection information sent by a policy and charging rules function PCRF or an access network discovery and selection function ANDSF; or
after handover of the UE occurs or the UE is moved to a new location, receiving, by the mobility management network element, the WLAN selection information sent by an old mobility management network element.

16. The method according to claim 14, wherein the sending, by the mobility management network element, the WLAN selection information to an access node of the cellular access network comprises:
when the UE is switched from an idle state to a connected state, sending, by the mobility management network element, the WLAN selection information to a cellular base station by using an initial context setup request message; or
sending, by the mobility management network element, the WLAN selection information to a cellular controller by using a radio access bearer assignment request message; or
sending, by the mobility management network element, the WLAN selection information to the access node of the cellular access network by using a bearer modify request message; or
sending, by the mobility management network element, the WLAN selection information to the access node of the cellular access network by using a downlink non-access stratum NAS transport message; or
sending, by the mobility management network element, the WLAN selection information to the access node of the cellular access network by using a UE context modify request message.

17. The method according to claim 14, after the acquiring, by a mobility management network element, WLAN selection information, further comprising:
modifying, by the mobility management network element, the WLAN selection information according to a local policy; and
the sending, by the mobility management network element, the WLAN selection information to an access node of the cellular access network comprises:
sending, by the mobility management network element, modified WLAN selection information to the access node of the cellular access network.

18. The method according to any one of claims 14 to 17, wherein the priority information comprises: a priority of a type of a connection technology for connecting to the cellular access network, and/or a priority of a type of a connection technology for connecting to the WLAN.

19. A network selection method, wherein the method comprises:
generating, by a policy and charging rules function PCRF or an access network discovery and selection function ANDSF, wireless local area network WLAN selection information, wherein the WLAN selection information comprises priority information, and the priority information is used to indicate that connection of user equipment UE to a WLAN has priority over connection of the UE to the cellular access network; and
sending, by the PCRF or the ANDSF, the WLAN selection information to an access node of the cellular access network, wherein the WLAN selection information is used by the access node of the cellular access network to select a WLAN network for the UE and instruct the UE to connect to the selected WLAN network.

20. The method according to claim 19, wherein the sending, by the PCRF or the ANDSF, the WLAN selection information to an access node of the cellular access network comprises:
establishing, by the PCRF or the ANDSF, a connection to the access node of the cellular access network, and sending the WLAN selection information to the access node of the cellular access network by using the established connection; or
sending, by the PCRF or the ANDSF, the WLAN selection information to a packet data network gateway PGW, sending, by the PGW, the WLAN selection information to a serving gateway SGW, sending, by the SGW, the WLAN selection information to a mobility management entity MME or a serving general packet radio service support node SGSN, and sending, by the MME or the SGSN, the WLAN selection information to the access node of the cellular access network; or
sending, by the PCRF or the ANDSF, the WLAN selection information to a gateway general packet radio service support node GGSN, sending, by the GGSN, the WLAN selection information to a serving general packet radio service support node SGSN, and sending, by the SGSN, the WLAN selection information to the access node of the cellular access network.

21. The method according to claim 20, wherein the establishing, by the PCRF or the ANDSF, a connection to the access node of the cellular access network comprises:
after an Internet Protocol-connectivity access network IP-CAN session of the UE is established, sending, by the PCRF or the ANDSF, a connection establishment message to the access node of the cellular access network, and establishing a connection to the access node of the cellular access network; or
receiving, by the PCRF or the ANDSF, a connection establishment message that is sent by the access node of the cellular access network after the UE is switched from an idle state to a connected state, and establishing a connection to the access node of the cellular access network.

22. The method according to claim 19, wherein the generating, by a PCRF or an ANDSF, WLAN selection information comprises:
generating, by the PCRF or the ANDSF, the WLAN selection information according to at least one of subscription information, a service usage status, location change information, or account information of the UE, or a network policy.

23. The method according to any one of claims 19 to 22, wherein the priority information comprises: a priority of a type of a connection technology for connecting to the cellular access network, and/or a priority of a type of a connection technology for connecting to the WLAN.

24. A network selection apparatus, wherein the apparatus comprises:
an acquiring module, configured to: after user equipment UE connects to a cellular access network, acquire wireless local area network WLAN selection information, wherein the WLAN selection information comprises priority information, and the priority information is used to indicate that connection of the UE to a WLAN has priority over connection of the UE to the cellular access network;
a selection module, configured to select a WLAN network for the UE according to the priority information, wherein a connection priority of the selected WLAN network is higher than a connection priority of the cellular access network; and
a sending module, configured to instruct the UE to connect to the selected WLAN network.

25. The apparatus according to claim 24, wherein the priority information comprises priority information of at least two WLAN networks; and
the selection module is configured to:
select, according to the priority information of the at least two WLAN networks, a WLAN network with the highest priority from the at least two WLAN networks.

26. The apparatus according to claim 24 or 25, wherein the WLAN selection information further comprises a load condition; and the selection module is configured to:
select a WLAN network for the UE according to the priority information and the load condition, wherein the selected WLAN network meets the load condition.

27. The apparatus according to claim 25, wherein the WLAN selection information further comprises load information of the at least two WLAN networks; and
the selection module is configured to:
select, according to the priority information of the at least two WLAN networks and the load information of the at least two WLAN networks, a WLAN network with the highest priority and the lowest load from the at least two WLAN networks.

28. The apparatus according to claim 24 or 25, wherein the WLAN selection information further comprises a signal quality condition; and the selection module is configured to:
select a WLAN network for the UE according to the priority information and the signal quality condition, wherein a signal received in the selected WLAN network by the UE meets the signal quality condition.

29. The apparatus according to claim 28, wherein the WLAN selection information further comprises signal quality information of the at least two WLAN networks; and
the selection module is configured to:
select, according to the priority information of the at least two WLAN networks and the signal quality information of the at least two WLAN networks, a WLAN network with the highest priority and the best signal quality from the at least two WLAN networks.

30. The apparatus according to claim 24, wherein the WLAN selection information further comprises a location condition; and the selection module is configured to:
select a WLAN network for the UE according to the priority information and the location condition, wherein the UE is located inside an area indicated in the location condition or located outside an area indicated in the location condition.

31. The apparatus according to any one of claims 24 to 30, wherein the WLAN selection information further comprises a realm name of a service provider; and
the sending module is configured to:
instruct the UE to connect to the WLAN provided by the service provider.

32. The apparatus according to any one of claims 24 to 30, wherein the acquiring module comprises:
a first acquiring unit, configured to receive the WLAN selection information sent by a mobility management entity MME or a serving general packet radio service support node SGSN; or
a second acquiring unit, configured to: after establishing a connection to a policy and charging rules function PCRF or an access network discovery and selection function ANDSF, receive the WLAN selection information sent by the PCRF or the ANDSF.

33. The apparatus according to any one of claims 24 to 32, wherein the priority information comprises: a priority of a type of a connection technology for connecting to the cellular access network, and/or a priority of a type of a connection technology for connecting to the WLAN.

34. A network selection apparatus, wherein the apparatus comprises:
a receiving module, configured to receive an indication sent by an access node of a cellular access network, wherein the indication comprises information about a WLAN network that is selected by the access node of the cellular access network according to wireless local area network WLAN selection information; and
a connection module, configured to connect to the WLAN network according to the indication received by the receiving module, wherein
the WLAN selection information comprises priority information, and the priority information is used to indicate that connection of the UE to a WLAN has priority over connection of the UE to the cellular access network.

35. The apparatus according to claim 34, wherein the indication further comprises a realm name of a service provider; and
the connection module is configured to:
connect, according to the information about the WLAN network and the realm name in the indication, to the WLAN provided by the service provider.

36. The apparatus according to claim 34 or 35, wherein the priority information comprises: a priority of a type of a connection technology for connecting to the cellular access network, and/or a priority of a type of a connection technology for connecting to the WLAN.

37. A network selection apparatus, wherein the apparatus comprises:
an acquiring module, configured to acquire wireless local area network WLAN selection information, wherein the WLAN selection information comprises priority information, and the priority information is used to indicate that connection of user equipment UE to a WLAN has priority over connection of the UE to the cellular access network; and
a sending module, configured to send the WLAN selection information to an access node of the cellular access network, wherein the WLAN selection information is used by the access node of the cellular access network to select a WLAN network for the UE and instruct the UE to connect to the selected WLAN network.

38. The apparatus according to claim 37, wherein the acquiring module comprises:
a first acquiring unit, configured to receive subscription information of the UE sent by a home subscriber server HSS, and acquire the WLAN selection information from the subscription information; or
a second acquiring unit, configured to receive the WLAN selection information sent by a policy and charging rules function PCRF or an access network discovery and selection function ANDSF; or
a third acquiring unit, configured to: after handover of the UE occurs or the UE is moved to a new location, receive the WLAN selection information sent by an old MME or SGSN.

39. The apparatus according to claim 37, wherein the sending module comprises:
a first sending unit, configured to: when the UE is switched from an idle state to a connected state, send the WLAN selection information to a cellular base station by using an initial context setup request message; or
a second sending unit, configured to send the WLAN selection information to a cellular controller by using a radio access bearer assignment request message; or
a third sending unit, configured to send the WLAN selection information to the access node of the cellular access network by using a bearer modify request message; or
a fourth sending unit, configured to send the WLAN selection information to the access node of the cellular access network by using a downlink non-access stratum NAS transport message; or
a fifth sending unit, configured to send the WLAN selection information to the access node of the cellular access network by using a UE context modify request message.

40. The apparatus according to claim 37, wherein the apparatus further comprises:
a modification module, configured to: after the acquiring module acquires the WLAN selection information, modify the WLAN selection information according to a local policy; and
correspondingly, the sending module is configured to:
send modified WLAN selection information to the access node of the cellular access network.

41. The apparatus according to any one of claims 37 to 40, wherein the priority information comprises: a priority of a type of a connection technology for connecting to the cellular access network, and/or a priority of a type of a connection technology for connecting to the WLAN.

42. A network selection apparatus, wherein the apparatus comprises:
a generation module, configured to generate wireless local area network WLAN selection information, wherein the WLAN selection information comprises priority information, and the priority information is used to indicate that connection of user equipment UE to a WLAN has priority over connection of the UE to the cellular access network; and
a sending module, configured to send the WLAN selection information generated by the generation module to an access node of the cellular access network, wherein the WLAN selection information is used by the access node of the cellular access network to select a WLAN network for the UE and instruct the UE to connect to the selected WLAN network.

43. The apparatus according to claim 42, wherein the sending module comprises:
a connection establishing unit, configured to establish a connection to the access node of the cellular access network; and
a first sending unit, sending the WLAN selection information to the access node of the cellular access network by using the established connection; or
the sending module comprises:
a second sending unit, configured to send the WLAN selection information to a mobility management entity MME or a serving general packet radio service support node SGSN by using a packet data network gateway PGW and a serving gateway SGW, and send the WLAN selection information to the access node of the cellular access network by using the MME or the SGSN; or send the WLAN selection information to a serving general packet radio service support node SGSN by using a gateway general packet radio service support node GGSN, and send the WLAN selection information to the access node of the cellular access network by using the SGSN.

44. The apparatus according to claim 43, wherein the connection establishing unit is configured to:
after an Internet Protocol-connectivity access network IP-CAN session of the UE is established, send a connection establishment message to the access node of the cellular access network, and establish a connection to the access node of the cellular access network; or
receive a connection establishment message that is sent by the access node of the cellular access network after the UE is switched from an idle state to a connected state, and establish a connection to the access node of the cellular access network.

45. The apparatus according to claim 42, wherein the generation module is configured to:
generate the WLAN selection information according to at least one of subscription information, a service usage status, location change information, or account information of the UE, or a network policy.

46. The apparatus according to any one of claims 42 to 45, wherein the priority information comprises: a priority of a type of a connection technology for connecting to the cellular access network, and/or a priority of a type of a connection technology for connecting to the WLAN.

47. A network selection system, wherein the system comprises: an access node of a cellular access network and user equipment UE, wherein
the access node of the cellular access network comprises the apparatus according to any one of claims 24 to 33; and
the UE comprises the apparatus according to claim 34 or 36.

48. A network selection system, wherein the system comprises: an access node of a cellular access network, user equipment UE, and a mobility management network element, wherein
the access node of the cellular access network comprises the apparatus according to any one of claims 24 to 33;
the UE comprises the apparatus according to claim 34 or 36; and
the mobility management network element comprises the apparatus according to any one of claims 37 to 41.

49. A network selection system, wherein the system comprises: an access node of a cellular access network, user equipment UE, and a policy and charging rules function PCRF or an access network discovery and selection function ANDSF, wherein
the access node of the cellular access network comprises the apparatus according to any one of claims 24 to 33;
the UE comprises the apparatus according to claim 34 or 36; and
the PCRF or the ANDSF comprises the apparatus according to any one of claims 42 to 46.
